# EUROPEAN PATENT APPLICATION

(11) **EP 4 848 057 A1**
(43) Date of publication of application: **02.12.2026**
(21) Application number: 25761128.5
(22) Date of filing: 28.02.2025
(51) Int. Cl.: G06F 3/04845

(54) **IMAGE DISPLAY METHOD AND RELATED APPARATUS**

(30) Priority: 01.03.2024 CN 202410239472
(71) Applicant: Honor Device Co., Ltd., Shenzhen, Guangdong 518040 (CN)
(72) Inventor: GAO, Xizhi, Shenzhen, Guangdong 518040 (CN)
(74) Representative: Isarpatent
(86) International application number: PCT/CN2025/079855
(87) International publication number: WO 2025/180494

(57) **Abstract**

This application provides an image display method and a related apparatus. In the method, if generation of time for drawing and rendering a layer exceeds a single signal period, after rendering is completed and before the 1^{st} vertical synchronization signal 2 is generated after rendering is completed, compositing of the rendered layer is triggered to obtain an image. By implementing the foregoing method, an electronic device can composite an image in time when an abnormality occurs in drawing and rendering a layer, thereby avoiding delay in displaying the image. In this way, a user can observe the image without delay, resulting in a good viewing experience.

## Description

This application claims priority to Chinese Patent Application No. 202410239472.6, filed with the China National Intellectual Property Administration on March 1, 2024 and entitled "IMAGE DISPLAY METHOD AND RELATED APPARATUS", which is incorporated herein by reference in its entirety.

### TECHNICAL FIELD

This application relates to the field of terminal technologies, and in particular, to an image display method and a related apparatus.

### BACKGROUND

An electronic device may refresh a displayed image. The electronic device may obtain an image by drawing, rendering, and compositing a layer, and display the image on a display. However, with development of electronic devices, to satisfy a user requirement, the electronic device may spend much time to draw and render a layer, to obtain a more sophisticated image. This may result in delay in displaying a frame of image on the electronic device.

### SUMMARY

This application provides an image display method and a related apparatus, which can ensure that an image can be composited in time and quickly and displayed in advance when time for drawing and rendering a single frame of layer by an electronic device is excessively long occasionally (for example, exceeds a single signal period). This can avoid consuming excessive resources for storing the composite image, allow a user to observe a high-frame-rate image for a better viewing experience, and ensure stability of the displayed image.

According to a first aspect, this application provides an image display method. The method is applied to an electronic device, and the method includes: The electronic device draws a first layer and then renders the first layer at a first moment, where duration for drawing and rendering the first layer does not exceed a single signal period, and the signal period is a period in which the electronic device generates two neighboring vertical synchronization signals. At a second moment, the electronic device composites the first layer to obtain a first image, and draws a second layer and then renders the second layer, where duration for drawing and rendering the second layer exceeds a single signal period, the second moment is after the first moment, and there is an interval of a single signal period between the second moment and the first moment. The electronic device displays the first image at a third moment, where the third moment is after the second moment, and there is an interval of a single signal period between the third moment and the second moment. After rendering of the second layer is completed and before a moment at which the 1^{st} vertical synchronization signal is generated after rendering of the second layer is completed, the electronic device composites the second layer to obtain a second image. The electronic device displays the second image.

By implementing the foregoing method, the electronic device can composite an image in time when an abnormality occurs in drawing and rendering a layer, thereby avoiding delay in displaying the image. In this way, a user can observe the image without delay, resulting in a good viewing experience.

With reference to the first aspect, in some implementations, that the electronic device displays the second image specifically includes: The electronic device displays the second image at a fourth moment, where the fourth moment is after the third moment, and there is an interval of a single signal period between the fourth moment and the third moment. In this way, the electronic device can normally display an image when an abnormality occurs in drawing and rendering a layer, resulting in a good user experience.

With reference to the first aspect, in some implementations, that the electronic device displays the second image specifically includes: The electronic device displays the second image at a sixth moment, where the sixth moment is after a moment at which the second image is obtained. In this way, the electronic device can display the second image after compositing the second image in advance.

With reference to the first aspect, in some implementations, before the electronic device displays the second image, the method further includes: The electronic device generates a first vertical synchronization signal at the sixth moment, where the first vertical synchronization signal is used to trigger the electronic device to display the second image at the sixth moment. In this way, when compositing the second image in advance, the electronic device can trigger, by using an added vertical synchronization signal 3, to display the second image in advance.

With reference to the first aspect, in some implementations, the moment at which the electronic device obtains the second image is after the third moment and before a fourth moment, the fourth moment is after the third moment, there is an interval of a single signal period between the fourth moment and the third moment, and the sixth moment is before the fourth moment. In this case, after rendering of the second layer is completed and before the moment at which the 1^{st} vertical synchronization signal is generated after rendering of the second layer is completed, the electronic device may composite the second image based on the second layer. A moment at which compositing of the second image is completed is before the moment at which the 1^{st} vertical synchronization signal is generated after rendering of the second layer is completed. Then, the electronic device may display the second image after compositing of the second image is completed and before the moment at which the 1^{st} vertical synchronization signal is generated after rendering of the second layer is completed.

With reference to the first aspect, in some implementations, the method further includes: The electronic device draws a third layer and then renders the third layer at the third moment, where duration for drawing and rendering the third layer does not exceed a single signal period; the electronic device composites the third layer at the fourth moment to obtain a third image; and the electronic device displays the third image at a fifth moment, where the fifth moment is after the fourth moment, and there is an interval of a single signal period between the fifth moment and the fourth moment. In this way, displaying the second image in advance does not affect normal drawing, rendering, compositing, and display of the third image.

With reference to the first aspect, in some implementations, the moment at which the electronic device obtains the second image is after a fourth moment, the fourth moment is after the third moment, there is an interval of a single signal period between the fourth moment and the third moment, and the sixth moment is after the fourth moment. In this case, after rendering of the second layer is completed and before the moment at which the 1^{st} vertical synchronization signal is generated after rendering of the second layer is completed, the electronic device may composite the second image based on the second layer. A moment at which compositing of the second image is completed is after the moment at which the 1^{st} vertical synchronization signal is generated after rendering of the second layer is completed. Then, the electronic device may display the second image after compositing of the second image is completed and before the moment at which the 1^{st} vertical synchronization signal is generated after compositing of the second image is completed.

With reference to the first aspect, in some implementations, the method further includes: The electronic device draws a third layer and then renders the third layer at the third moment, where duration for drawing and rendering the third layer does not exceed a single signal period; after the electronic device obtains the second image, the electronic device composites the third layer to obtain a third image; and the electronic device displays the third image at a fifth moment, where the fifth moment is after the fourth moment, and the fifth moment is a moment at which the electronic device generates the 1^{st} vertical synchronization signal after obtaining the third image. In this way, although displaying the second image in advance may affect compositing of the third image, normal display of the third image is not affected.

With reference to the first aspect, in some implementations, before the electronic device draws the first layer and then renders the first layer at the first moment, the method further includes: The electronic device starts a first application, where the first application includes one or more of the following: a shooting game, a fighting game, a racing game, a rhythm game, a sports competitive game, or a multiplayer online competitive game.

With reference to the first aspect, in some implementations, the electronic device further includes a drawing thread, a rendering thread, a graphics compositor, and a display. At the first moment, the electronic device draws the first layer by using the drawing thread, and then renders the first layer by using the rendering thread. At the second moment, the electronic device composites the first layer by using the graphics compositor to obtain the first image, draws the second layer by using the drawing thread, and then renders the second layer by using the rendering thread. The electronic device displays the first image by using the display at the third moment. After rendering of the second layer is completed and before a time at which the 1^{st} vertical synchronization signal is generated after rendering of the second layer is completed, the electronic device composites the second layer by using the graphics compositor to obtain the second image. The electronic device displays the second image by using the display.

According to a second aspect, this application provides an electronic device, including one or more processors and one or more memories. The one or more memories are coupled to the one or more processors. The one or more memories are configured to store computer program code. The computer program code includes computer instructions. When the one or more processors execute the computer instructions, the electronic device is enabled to perform the method according to any one of the first aspect or the implementations of the first aspect.

According to a third aspect, an embodiment of this application provides a computer storage medium, including computer instructions. When the computer instructions are run on an electronic device, the electronic device is enabled to perform the method according to any one of the first aspect or the implementations of the first aspect.

### BRIEF DESCRIPTION OF DRAWINGS

FIG. 1 is a block diagram of a software structure of an electronic device according to an embodiment of this application;
FIG. 2 is a diagram of a vertical synchronization signal according to an embodiment of this application;
FIG. 3A is a diagram of a principle of drawing a layer, rendering a layer, compositing a layer, and displaying an image by an electronic device according to an embodiment of this application;
FIG. 3B is another diagram of drawing a layer, rendering a layer, compositing a layer, and displaying an image by an electronic device according to an embodiment of this application;
FIG. 3C is another diagram of drawing a layer, rendering a layer, compositing a layer, and displaying an image by an electronic device according to an embodiment of this application;
FIG. 4 is a diagram of using an image display method by an electronic device according to an embodiment of this application;
FIG. 5 is a flowchart of an image display method according to an embodiment of this application;
FIG. 6 is another diagram of using an image display method by an electronic device according to an embodiment of this application;
FIG. 7 is a flowchart of another image display method according to an embodiment of this application;
FIG. 8 is another diagram of an electronic device using an image display method according to an embodiment of this application;
FIG. 9 is a flowchart of another image display method according to an embodiment of this application;
FIG. 10 is an interaction diagram of internal modules of an electronic device using an image display method according to an embodiment of this application;
FIG. 11 is a diagram of a hardware structure of an electronic device according to an embodiment of this application; and
FIG. 12 is a diagram of a structure of a chip according to an embodiment of this application.

### DESCRIPTION OF EMBODIMENTS

The technical solutions in embodiments of this application are described clearly and in detail below with reference to the accompanying drawings. In descriptions of embodiments of this application, unless otherwise specified, "/" represents "or". For example, A/B may represent A or B. In this specification, "and/or" is merely an association relationship for describing associated objects, and represents that three relationships may exist. For example, A and/or B may represent the following three cases: Only A exists, both A and B exist, and only B exists.

The terms "first" and "second" mentioned below are used merely for the purpose of description, and shall not be understood as implying or implying relative importance or implying a quantity of indicated technical features. Therefore, a feature defined with "first" and "second" may explicitly or implicitly includes one or more features. In the descriptions of embodiments of this application, unless otherwise stated, "a plurality of" means two or more.

The term "embodiment" mentioned in this application means that a specific feature, structure, or characteristic described in combination with an embodiment may be included in at least one embodiment of this application. The phrase shown in various locations in the specification may not necessarily refer to a same embodiment, and is not an independent or optional embodiment exclusive from another embodiment. A person skilled in the art explicitly or implicitly understands that embodiments described in this application may be combined with other embodiments.

The term "user interface (user interface, UI)" in the following embodiments of this application is a medium interface for interaction and information exchange between an application or operating system and a user, and implements conversion between an internal form of information and a form acceptable to the user. The user interface is source code written in specific computer language such as Java or an extensible markup language (extensible markup language, XML). The interface source code is parsed and rendered on an electronic device, and finally presented as content that can be identified by the user. A common representation form of the user interface is a graphical user interface (graphical user interface, GUI), which is a user interface that is related to a computer operation and that is displayed in a graphical manner. The user interface may be a visible interface element displayed on a display of the electronic device, for example, text, an icon, a button, a menu, a tab, a text box, a dialog box, a status bar, a navigation bar, and Widget.

A software architecture of an electronic device provided in an embodiment of this application is first described.

For example, the foregoing electronic device may be a device including a display (such as a touchscreen), for example, a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), or an augmented reality (augmented reality, AR)/virtual reality (virtual reality, VR) device. A specific form of the electronic device is not specifically limited in embodiments of this application.

A software system of the electronic device may use a layered architecture, an event-driven architecture, a microkernel architecture, a microservice architecture, or a cloud architecture. In embodiments of the present invention, an Android system with a layered architecture is used as an example to describe a software structure of the electronic device.

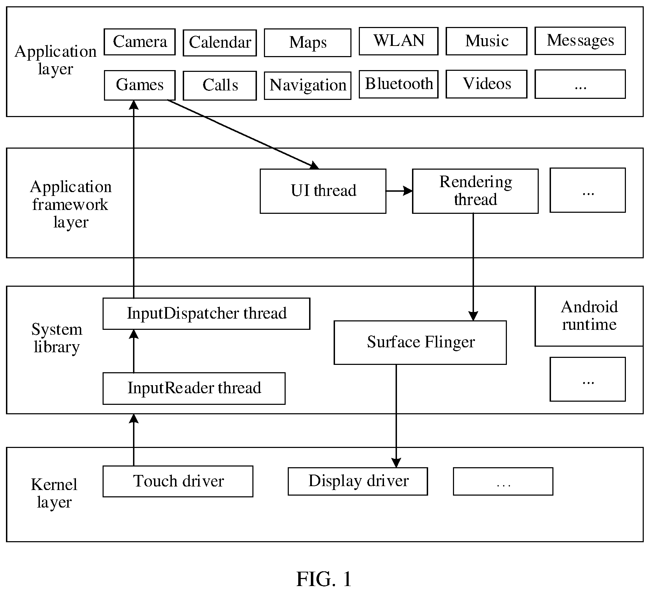

FIG. 1 is a block diagram of the software structure of the electronic device according to an embodiment of the present invention.

In the layered architecture, software is divided to several layers, and each layer has a clear role and task. The layers communicate with each other through a software interface. In some embodiments, the Android system is divided into four layers, that is, an application layer, an application framework layer, an Android runtime (Android runtime) and system library, and a kernel layer from top to bottom.

The application layer may include a series of application packages.

As shown in FIG. 1, the application packages may include applications such as Camera, Calendar, Games, Calls, Maps, Navigation, WLAN, Bluetooth, Music, Videos, and Messages.

The application framework layer provides an application programming interface (application programming interface, API) and a programming framework for the application at the application layer. The application framework layer includes some predefined functions.

As shown in FIG. 1, the application framework layer includes, but is not limited to, a UI thread and a rendering thread. The UI thread is a thread running in a central processing unit (Central Processing Unit, CPU) of the electronic device. The UI thread is used for drawing a layer. The rendering thread is a thread running in a graphics processing unit (graphics processing unit, GPU) of the electronic device. The rendering thread is used for rendering the drawn layer.

The Android runtime includes a core library and a virtual machine. The Android runtime is responsible for scheduling and management of an Android system.

The core library includes two parts: a function that needs to be invoked in Java language, and a core library of Android.

The application layer and the application framework layer are run in the virtual machine. The virtual machine executes Java files of the application layer and the application framework layer as binary files. The virtual machine is configured to perform functions such as object lifecycle management, stack management, thread management, security and exception management, and garbage collection.

The system library may include a plurality of function modules. The system library may include, but is not limited to, an input dispatcher (InputDispatcher) thread, an input reader (InputReader) thread, a graphics compositor (Surface Flinger) thread, and the like.

The InputDispatcher thread is configured to wait for a new event, and allocate the new event to an application.

The InputReader thread is configured to read and preprocess an original input event, and send the input event to a queue managed by the InputDispatcher thread.

Surface Flinger is configured to composite a rendered layer to obtain an image.

Most types of the framework layer are "intermediaries" for applications to use library files in the system library. Upper-layer applications are written in Java language and require the most direct Java interface support, while the system library supports running in another language (such as C++ language). Therefore, the framework layer acts as an intermediary between the application layer and the system library. The modules in the framework layer do not actually implement specific functions, or only implement a part of the functions, but focus on completing main functions in the core library. The difference is that the framework layer is mostly written in Java language, while the system library is mostly written in C++ language.

The kernel layer is a layer between hardware and software. The kernel layer includes at least a touch driver, a display driver, and the like. The kernel layer is configured to receive an instruction of a software layer to control corresponding hardware to execute a corresponding task.

It may be understood that the software architecture shown in FIG. 1 does not constitute a specific limitation on the electronic device. In some other embodiments of this application, the electronic device may include more or fewer modules than those shown in the figure, or some modules may be combined, or some modules may be split, or the like.

**The following describes, with reference to** **FIG. 1****, a diagram of a software processing procedure for displaying an image according to an embodiment of this application.**

When a touch sensor receives a touch operation, a corresponding hardware interrupt is sent to the kernel layer. The touch driver in the kernel layer processes the touch operation into a touch event (including information such as touch coordinates and a timestamp of the touch operation).

The touch driver sends the original input event to the InputReader thread of the system library. After preprocessing the touch event, the InputReader thread sends the touch event to the InputDispatcher thread.

The application framework layer may identify a specific application corresponding to the touch event.

The InputReader thread may draw a layer corresponding to the touch event based on information provided by the application.

The rendering thread may render the drawn layer.

Surface Flinger may composite the rendered layer to obtain an image.

Finally, the display driver invokes the composited image, and presents the composited image by using a display.

It can be learned from the foregoing procedure that, before an image is displayed on the display, steps such as drawing, rendering, and compositing need to be performed. Drawing the layer may include: arranging elements such as a text, a shape, and a picture on one or more layers according to a particular layout. Rendering the layer may include: performing processing such as ray tracing, coloration, and shadow generation on the one or more drawn layers, so that the rendered layer is as close to visual representation of the real world as possible. Compositing the layer to obtain the image may include: superimposing the one or more rendered layers to generate the complete image. Compositing the layer to obtain the image may be referred to as compositing the image for short.

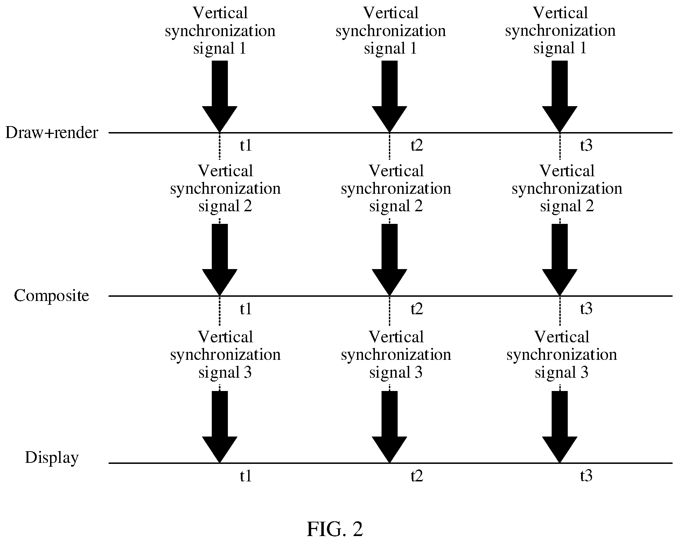

The following describes, with reference to FIG. 2, a diagram of a vertical synchronization signal triggered by the electronic device for drawing, rendering, and compositing.

As shown in FIG. 2, a vertical synchronization signal 1 may be used for triggering drawing of a layer and rendering of the layer. Specifically, the vertical synchronization signal 1 may be used for triggering the UI thread to draw the layer and the rendering thread to render the layer drawn by the UI thread. Generally, after the UI thread draws the layer, the rendering thread may immediately render the drawn layer if there is no rendering task currently.

A vertical synchronization signal 2 may be used for triggering compositing of the rendered layer to obtain the image. Specifically, the vertical synchronization signal 2 may be used to trigger Surface Flinger to composite the layer rendered by the rendering thread, to obtain the image.

A vertical synchronization signal 3 may be used for triggering the hardware to refresh the image displayed on the display. The vertical synchronization signal 3 may be a hardware signal triggered by the display driver of the electronic device.

In embodiments of this application, a period for generating the vertical synchronization signal 3 may be determined by a frame rate of the display of the electronic device. For example, the period may be a reciprocal of the frame rate of the display. For example, the frame rate of the display of the electronic device may be any value such as 60 hertz (Hz), 70 Hz, 75 Hz, 80 Hz, 90 Hz, or 120 Hz. Using an example in which the frame rate of the display is 60 Hz, the period for generating the vertical synchronization signal 3 is 1/60 = 0.01667 seconds (s) = 16.667 milliseconds (ms).

In a possible implementation, the electronic device may support a plurality of different frame rates. The frame rate of the electronic device may be switched between the foregoing different frame rates. The frame rate in embodiments of this application is a frame rate currently used by the electronic device. That is, the period for generating the vertical synchronization signal 3 is a reciprocal of the frame rate currently used by the electronic device.

As shown in FIG. 2, the electronic device has a vertical synchronization signal 3 triggered by the hardware drive every one signal period. The vertical synchronization signal 1 and the vertical synchronization signal 2 are generated based on the vertical synchronization signal 3, that is, the vertical synchronization signal 3 may be a signal source of the vertical synchronization signal 1 and the vertical synchronization signal 2. Alternatively, the vertical synchronization signal 1 and the vertical synchronization signal 2 are synchronous with the vertical synchronization signal 3. That is, signal periods of the vertical synchronization signal 1 and the vertical synchronization signal 2 are the same as a signal period of the vertical synchronization signal 3, and phases thereof are consistent.

For example, as shown in FIG. 2, the signal period of the vertical synchronization signal 1 and the signal period of the vertical synchronization signal 2 are the same as the signal period of the vertical synchronization signal 3. In addition, as shown in FIG. 2, the phases of the vertical synchronization signal 1, the vertical synchronization signal 2, and the vertical synchronization signal 3 are consistent. It may be understood that, in an actual implementation process, a particular phase error may exist among the vertical synchronization signal 1, the vertical synchronization signal 2, and the vertical synchronization signal 3 due to various factors (such as processing performance). It should be noted that, during understanding of the method in embodiments of this application, the foregoing phase error is ignored.

In conclusion, the vertical synchronization signal 1, the vertical synchronization signal 2, and the vertical synchronization signal 3 are all periodic discrete signals. For example, as shown in FIG. 2, there is a vertical synchronization signal 1 every one signal period, there is a vertical synchronization signal 2 every one signal period, and there is a vertical synchronization signal 3 every one signal period.

The signal periods of the vertical synchronization signal 1, the vertical synchronization signal 2, and the vertical synchronization signal 3 may all be referred to as synchronization periods TZ. That is, the synchronization period in embodiments of this application is a reciprocal of the frame rate of the electronic device.

Generally, a single vertical synchronization signal may trigger an operation such as drawing, rendering, or compositing. Conditions required by the electronic device to trigger drawing, rendering, or compositing include: receiving a result of the last step and generating a vertical synchronization signal. For example, a condition required by the electronic device to trigger rendering includes: generating the drawn layer and the vertical synchronization signal 2. A condition required by the electronic device to triggering compositing includes: generating the rendered layer and the vertical synchronization signal 3.

It should be noted that, in different systems or architectures, the vertical synchronization signal may have different names. For example, in some systems or architectures, a name of the vertical synchronization signal used for triggering drawing of one or more layers (that is, the vertical synchronization signal 1) may not be VSYVC _ APP. However, regardless of the name of the vertical synchronization signal, any synchronization signal with similar functions that conforms to the technical concept of the method provided in embodiments of this application shall fall within the protection scope of this application.

In addition, in different systems or architectures, the vertical synchronization signal may be defined differently.

For example, in some other systems or architectures, the vertical synchronization signal 1 may be defined as follows: The vertical synchronization signal 1 may be used for triggering rendering of one or more layers. The vertical synchronization signal 2 may be defined as follows: The vertical synchronization signal 2 may be used for triggering generation of an image based on the one or more layers. The vertical synchronization signal 3 may be defined as follows: The vertical synchronization signal 3 may be used for triggering display of the image. The definition of the vertical synchronization signal is not limited in embodiments of this application. However, regardless of the definition of the vertical synchronization signal, any synchronization signal with similar functions that conforms to the technical concept of the method provided in embodiments of this application shall fall within the protection scope of this application.

With reference to the foregoing descriptions based on FIG. 1 and FIG. 2, in response to the touch operation, when generating the vertical synchronization signal 1, the application corresponding to the touch operation in the electronic device may invoke the UI thread to draw the layer and invoke the rendering thread to render the drawn layer. Then, when generating the vertical synchronization signal 2, a hardware composer (Hardware Composer, HWC) of the electronic device invokes Surface Flinger to composite the rendered layer, to obtain the image. Next, when generating the vertical synchronization signal 3, the display driver of the electronic device displays the composited image on the display. In embodiments of this application, the foregoing drawing, rendering, compositing, and display are all periodic.

In another possible implementation, the electronic device may not need to respond to the touch operation. The application may automatically invoke the UI thread to draw the layer and invoke the rendering thread to render the drawn layer when the vertical synchronization signal 1 is generated. For example, in a process of starting the game application, when the electronic device does not generate any user operation, the displayed image may still be updated.

The following describes examples of drawing a layer, rendering a layer, compositing a layer, and displaying an image by the electronic device.

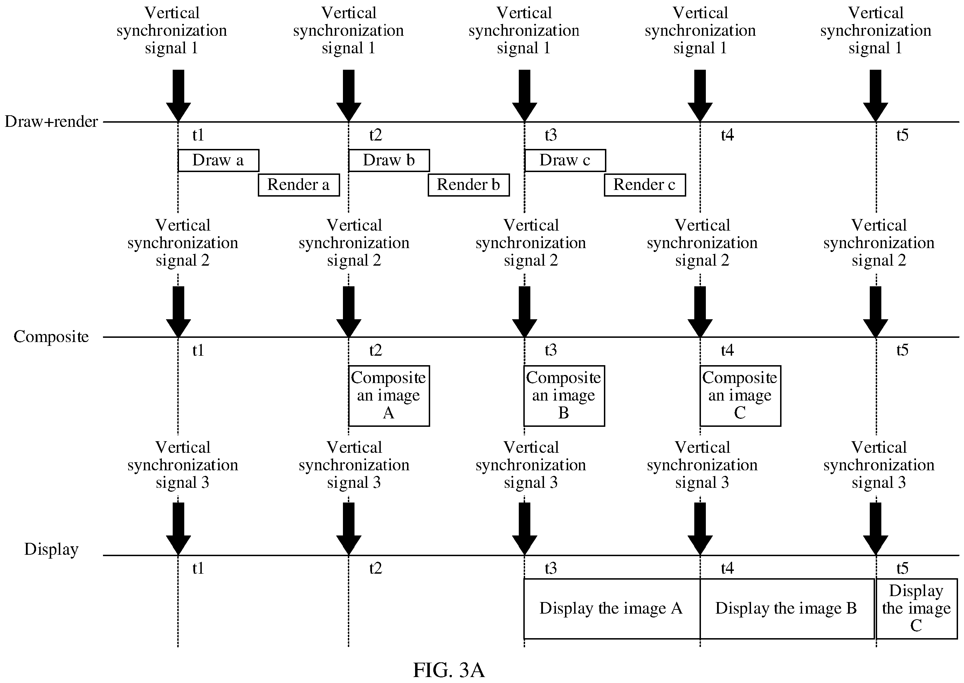

As shown in FIG. 3A, for example, at a moment t1, the electronic device generates a vertical synchronization signal 1. The electronic device may draw a in response to the vertical synchronization signal 1 at the moment t1. After the drawing is completed, the electronic device may immediately render a. a may refer to one or more layers in a same frame. At a moment t2, the electronic device generates a vertical synchronization signal 2. The electronic device may composite rendered a in response to the vertical synchronization signal 2 at the moment t2, to obtain an image A. At a moment t3, the electronic device generates a vertical synchronization signal 3. The electronic device may display the image A in response to the vertical synchronization signal 3 at the moment t3.

Similarly, at a moment t2, the electronic device generates a vertical synchronization signal 1. The electronic device may draw b in response to the vertical synchronization signal 1 at the moment t2. After the drawing is completed, the electronic device may immediately render b. b may refer to one or more layers in a same frame. At a moment t3, the electronic device generates a vertical synchronization signal 2. The electronic device may composite rendered b in response to the vertical synchronization signal 2 at the moment t3, to obtain an image B. At a moment t4, the electronic device generates a vertical synchronization signal 3. The electronic device may display the image B in response to the vertical synchronization signal 3 at the moment t4.

Similarly, at a moment t3, the electronic device generates a vertical synchronization signal 1. The electronic device may draw c in response to the vertical synchronization signal 1 at the moment t3. After the drawing is completed, the electronic device may immediately render c. c may refer to one or more layers in a same frame. At a moment t4, the electronic device generates a vertical synchronization signal 2. The electronic device may composite rendered c in response to the vertical synchronization signal 2 at the moment t4, to obtain an image C. At a moment t5, the electronic device generates a vertical synchronization signal 3. The electronic device may display the image C in response to the vertical synchronization signal 3 at the moment t5.

It can be learned from the foregoing content that, if a sum of time for drawing a and time for rendering a by the electronic device does not exceed a single signal period, a sum of time for drawing B and time for rendering B by the electronic device does not exceed a single signal period, and a sum of time for drawing C and time for rendering C by the electronic device does not exceed a single signal period, the electronic device may display the image A from the moment t3 to the moment t4, display the image B from the moment t4 to the moment t5, and display the image C from the moment t5 to the moment t6. That is, the electronic device may display each frame of image without delay, that is, does not actually display an image that needs to be displayed in a current signal period in a next signal period.

However, if a sum of time for drawing a layer and time for rendering the layer by the electronic device is excessively long, for example, exceeds a single signal period, delay in displaying an image may occur.

The following describes other examples of drawing a layer, rendering a layer, compositing a layer, and displaying an image by the electronic device.

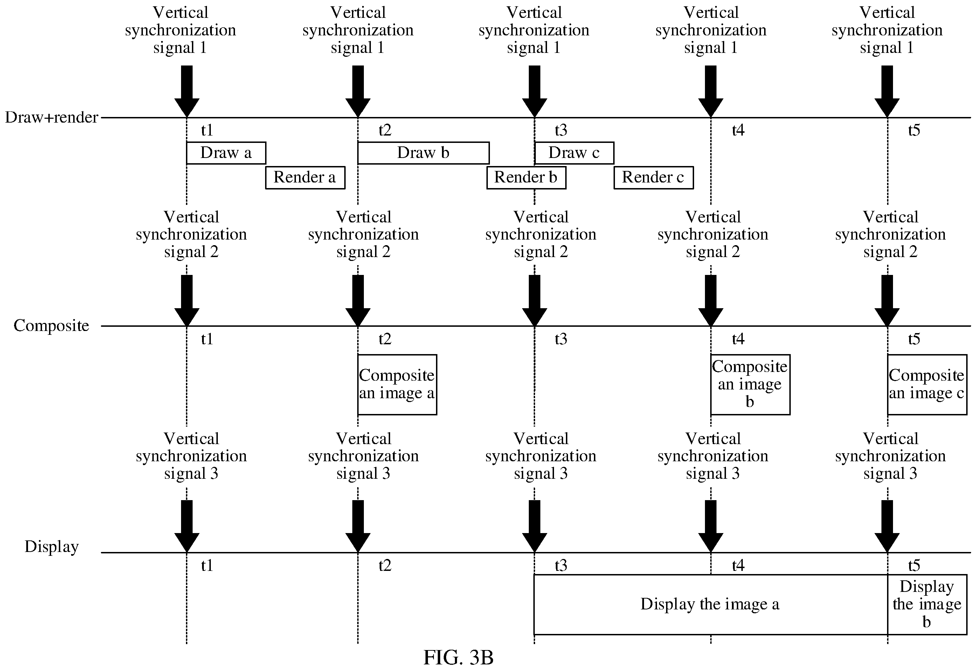

As shown in FIG. 3B, at a moment t1, the electronic device generates a vertical synchronization signal 1. The electronic device may draw a in response to the vertical synchronization signal 1 at the moment t1. After the drawing is completed, the electronic device may immediately render a. At a moment t2, the electronic device generates a vertical synchronization signal 2. The electronic device may composite rendered a in response to the vertical synchronization signal 2 at the moment t2, to obtain an image A. At a moment t3, the electronic device generates a vertical synchronization signal 3. The electronic device may display the image A in response to the vertical synchronization signal 3 at the moment t3.

Similarly, at a moment t2, the electronic device generates a vertical synchronization signal 1. The electronic device may draw b in response to the vertical synchronization signal 1 at the moment t2. After the drawing is completed, the electronic device may immediately render b. However, because the electronic device draws b for a long time, the electronic device cannot complete drawing b and rendering b within a single signal period. That is, the electronic device has not completed rendering of b at the moment t3.

Therefore, the electronic device generates the vertical synchronization signal 2 at the moment t3, but because the electronic device has not completed rendering of b at this moment, the electronic device cannot composite an image B in response to the vertical synchronization signal 2 at the moment t3. In addition, the electronic device needs the vertical synchronization signal 2 to trigger compositing of the layer to obtain the image. Therefore, the electronic device can only composite rendered b in response to the vertical synchronization signal 2 at the moment t4, to obtain the image B. At a moment t5, the electronic device generates a vertical synchronization signal 3. The electronic device may display the image B in response to the vertical synchronization signal 3 at the moment t5.

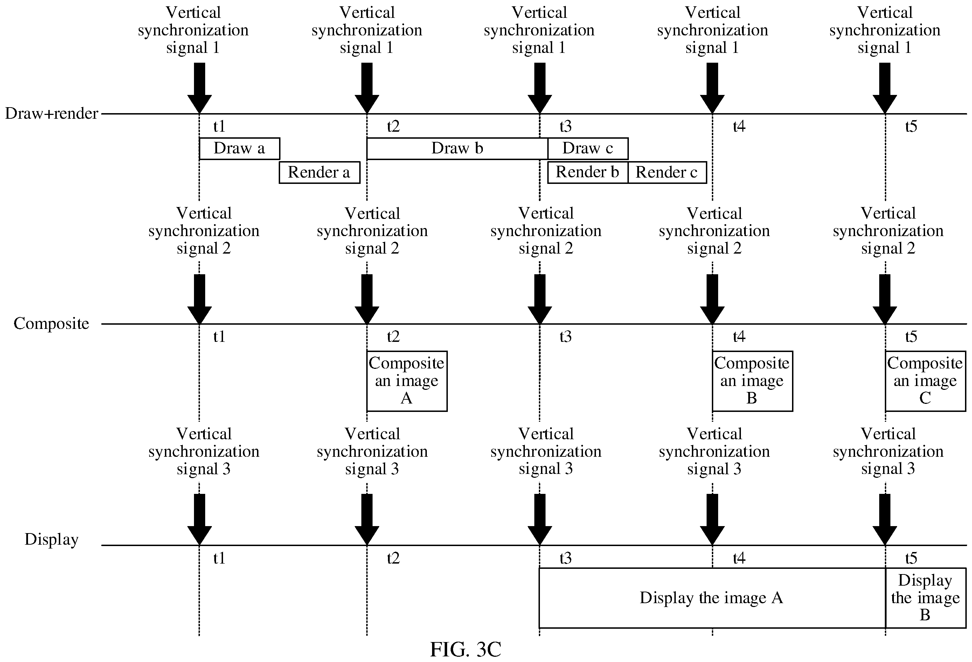

As shown in FIG. 3C, at a moment t1, the electronic device generates a vertical synchronization signal 1. The electronic device may draw a in response to the vertical synchronization signal 1 at the moment t1. After the drawing is completed, the electronic device may immediately render a.

At a moment t2, the electronic device generates a vertical synchronization signal 2. The electronic device may composite rendered a in response to the vertical synchronization signal 2 at the moment t2, to obtain an image A.

At a moment t3, the electronic device generates a vertical synchronization signal 3. The electronic device may display the image A in response to the vertical synchronization signal 3 at the moment t3.

Similarly, at a moment t2, the electronic device generates a vertical synchronization signal 1. The electronic device may draw b in response to the vertical synchronization signal 1 at the moment t2. After the drawing is completed, the electronic device may immediately render b. However, because time for drawing b by the electronic device exceeds a single signal period, the electronic device cannot complete drawing b and rendering b within a single signal period. That is, the electronic device has not completed drawing of b at the moment t3.

Therefore, the electronic device generates the vertical synchronization signal 2 at the moment t3, but because the electronic device has not completed drawing of b at this moment, the electronic device cannot composite an image B in response to the vertical synchronization signal 2 at the moment t3. In addition, the electronic device needs the vertical synchronization signal 2 to trigger compositing of the layer to obtain the image. Therefore, the electronic device can only composite rendered b in response to the vertical synchronization signal 2 at the moment t4, to obtain the image B. At a moment t5, the electronic device generates a vertical synchronization signal 3. The electronic device may display the image B in response to the vertical synchronization signal 3 at the moment t5.

At the moment t3, the electronic device generates the vertical synchronization signal 1, and needs to start to draw c in response to the vertical synchronization signal 1. However, because drawing of b has not been completed at this moment, the UI thread in the electronic device is occupied and cannot start to draw c. Therefore, the electronic device can start to draw c only after the UI thread is idle after b is drawn.

It can be learned from the foregoing content that, when the sum of the time for drawing a and the time for rendering a by the electronic device does not exceed a single signal period, and the sum of the time for drawing b and the time for rendering b by the electronic device exceeds a single signal period, the electronic device may display the image A from the moment t3 to the moment t5, and the electronic device can display the image B only after the moment t5. That is, the electronic device may actually display an image that needs to be displayed in a current signal period in a next signal period.

To reduce occurrence of the foregoing case, embodiments of this application provide an image display method and an electronic device. In this method, if generation of time for drawing and rendering a layer exceeds a single signal period, after rendering is completed and before the 1^{st} vertical synchronization signal 2 is generated after rendering is completed, compositing of the rendered layer is triggered to obtain an image. That is, when the electronic device misses an occasion for image compositing, the electronic device does not wait for a next vertical synchronization signal 2 to arrive before triggering compositing of the rendered layer.

By implementing the foregoing method, the electronic device can composite an image in time when an abnormality occurs in drawing and rendering a layer, thereby avoiding delay in displaying the image. In this way, a user can observe the image without delay, resulting in a good viewing experience.

In addition, in some game scenes, the image display method provided in embodiments of this application can better satisfy touch responsiveness.

To better understand the procedure of the image display method provided in embodiments of this application, the following first describes an example in which the electronic device uses the image display method.

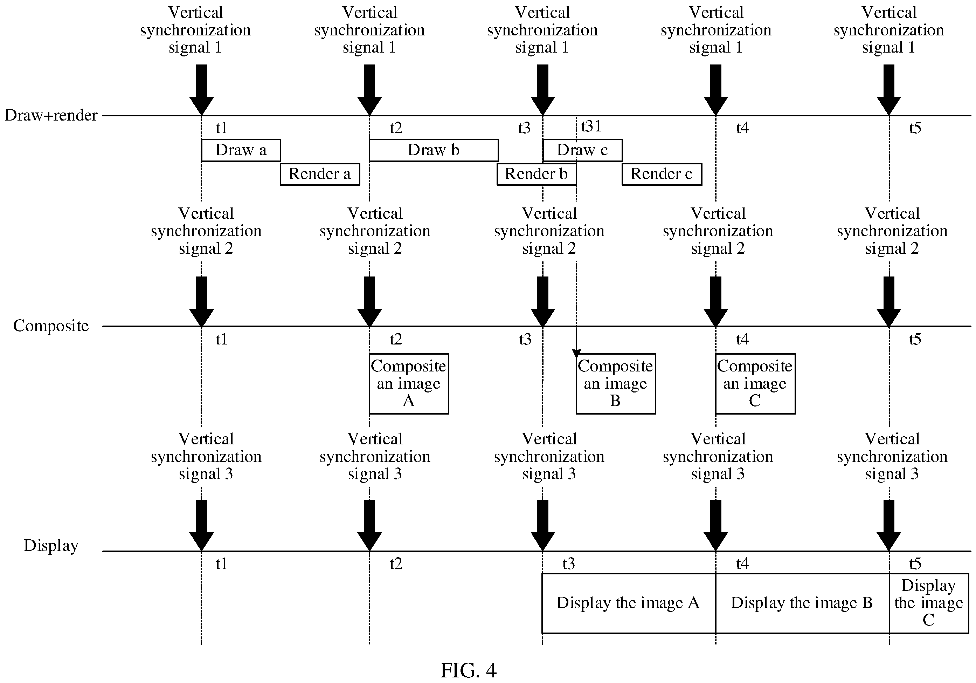

FIG. 4 is a diagram of using an image display method by an electronic device according to an embodiment of this application.

As shown in FIG. 4, at a moment t1, the electronic device generates a vertical synchronization signal 1. The electronic device may draw a in response to the vertical synchronization signal 1 at the moment t1. After the drawing is completed, the electronic device may immediately render a. In addition, the electronic device has completed drawing and rendering of a before the moment t2. At a moment t2, the electronic device generates a vertical synchronization signal 2. The electronic device may composite rendered a in response to the vertical synchronization signal 2 at the moment t2, to obtain an image A. At a moment t3, the electronic device generates a vertical synchronization signal 3. The electronic device may display the image A in response to the vertical synchronization signal 3 at the moment t3.

At a moment t2, the electronic device may generate a vertical synchronization signal 1. The electronic device may draw b in response to the vertical synchronization signal 1 at the moment t1. After the drawing is completed, the electronic device may immediately render b. In addition, the electronic device has not completed rendering of b at the moment t3.

In embodiments of this application, in a special case, the electronic device may trigger image compositing without using a vertical synchronization signal 2. Therefore, at the moment t31, that is, when the electronic device completes rendering of b, compositing of rendered b is triggered to obtain an image B. At a moment t4, the electronic device generates a vertical synchronization signal 3. The electronic device may display the image B in response to the vertical synchronization signal 3 at the moment t4.

At a moment t3, the electronic device generates a vertical synchronization signal 1. Although the electronic device has not completed rendering of b at the moment t3, because drawing and rendering are performed in different threads, drawing of c by the electronic device is not affected. Therefore, the electronic device may draw c in response to the vertical synchronization signal 1 at the moment t3. After the drawing is completed, the electronic device may immediately render c. In addition, the electronic device has completed drawing and rendering of c before the moment t4. At a moment t4, the electronic device generates a vertical synchronization signal 2. The electronic device may composite rendered c in response to the vertical synchronization signal 2 at the moment t4, to obtain an image C. At a moment t5, the electronic device generates a vertical synchronization signal 3. The electronic device may display the image C in response to the vertical synchronization signal 3 at the moment t5.

In a possible implementation, for the foregoing procedure of obtaining the image C by the electronic device, refer to the procedure of obtaining the image A or the procedure of obtaining the image B. That is, in embodiments of this application, images continuously composited by the electronic device for a plurality of times may be triggered not by the vertical synchronization signal 2, but by completion of layer rendering.

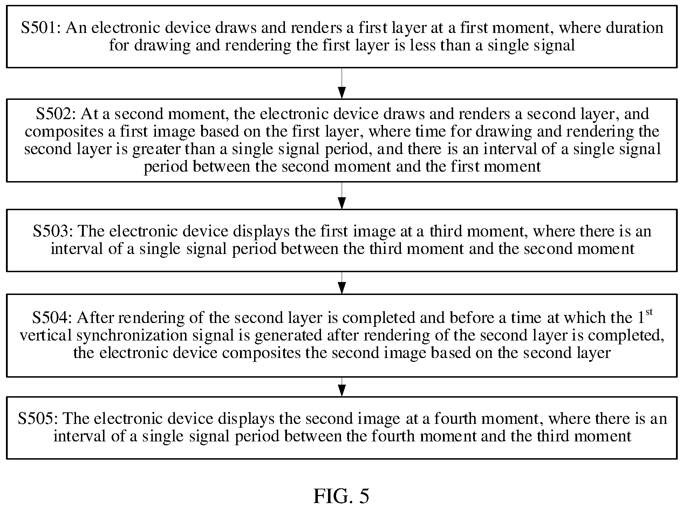

The following describes, with reference to FIG. 5, the procedure of the image display method provided in embodiments of this application. In the flowchart shown in FIG. 5, delay time for the electronic device to composite a layer can be reduced, so that the electronic device can composite the layer as soon as possible, thereby ensuring display of the image without delay.

For example, the method provided in embodiments of this application may be performed by an image processing apparatus. The apparatus may be any one of the foregoing electronic devices (for example, the apparatus may be the electronic device shown in FIG. 1). Alternatively, the apparatus may be a central processing unit (Central Processing Unit, CPU for short) in the electronic device, or a control module configured to perform the method provided in embodiments of this application in the electronic device.

In embodiments of this application, the method provided in embodiments of this application is described by using an example in which the foregoing image display method is performed by the electronic device.

The method procedure includes the following steps.

**S501: The electronic device draws and renders a first layer at a first moment, where duration for drawing and rendering the first layer is less than a single signal period.**

The first moment may be a moment at which the electronic device generates a vertical synchronization signal 1. The vertical synchronization signal 1 may be used to trigger the electronic device to draw the first layer. The first layer may be a layer starting to be drawn in response to the vertical synchronization signal 1 at the first moment.

**S502: At a second moment, the electronic device draws and renders a second layer, and composites a first image based on the first layer, where duration for drawing and rendering the second layer is greater than a single signal period, and there is an interval of a single signal period between the second moment and the first moment.**

The second moment may be a moment at which the electronic device generates a vertical synchronization signal 1. The vertical synchronization signal 1 may be used to trigger the electronic device to draw the second layer. The second layer may be a layer starting to be drawn in response to the vertical synchronization signal 1 at the second moment.

In embodiments of this application, there is an interval of a single signal period between the second moment and the first moment, and the second moment may be after the first moment.

In some implementations, a UI thread periodically starts to draw a UI layer based on the vertical synchronization signal 1. That is, after S401, the UI thread of the electronic device may quickly complete drawing of the first layer. However, because the vertical synchronization signal 1 is not generated between completion of drawing of the first layer and the second moment, the UI thread of the electronic device does not start to draw the second layer immediately after the first layer is drawn. Instead, after receiving the vertical synchronization signal 1 at the second moment, the electronic device needs to start to draw the second layer in response to the vertical synchronization signal 1.

Because the duration for drawing and rendering the first layer is less than a single signal period, the electronic device has completed drawing and rendering of the first layer at the second moment. Therefore, the electronic device may composite the rendered first layer in response to a vertical synchronization signal 2 generated at the second moment, to obtain the first image.

**S503: The electronic device displays the first image at a third moment, where there is an interval of a single signal period between the third moment and the second moment.**

Because the electronic device has obtained the first image at the third moment through compositing, the electronic device may refresh, in response to a vertical synchronization signal 3 generated at the third moment, the image displayed by the electronic device. That is, the electronic device may display the first image.

Because the time for drawing and rendering the second layer is greater than a single signal period and less than two signal periods, the electronic device has not completed drawing and rendering of the second layer at the third moment. Therefore, the electronic device cannot composite the second layer at the third moment.

**S504: After rendering of the second layer is completed** and before a time at which the 1^{st} vertical synchronization signal is generated after rendering of the second layer is completed, **the electronic device composites the second image based on the second layer.**

In some implementations, before the electronic device performs S504, the electronic device may determine whether an occasion of compositing a third image in response to the 1^{st} vertical synchronization signal 2 (a vertical synchronization signal 2 at the third moment) after the first layer starts to be drawn is missed, and if yes, may perform S504; or if no, the electronic device may composite the third image based on the second layer in response to the vertical synchronization signal 2 at the third moment.

Specifically, whether the occasion of compositing the third image in response to the vertical synchronization signal 2 at the third moment is missed may be determined in the following manner:

If the duration for drawing and rendering the second layer exceeds a single signal period, it may be considered that the occasion of compositing the third image in response to the vertical synchronization signal 2 at the third moment is missed.

If a moment at which the second layer is completed is after the third moment, it may be considered that the occasion of compositing the third image in response to the vertical synchronization signal 2 at the third moment is missed.

If the duration for drawing and rendering the second layer exceeds a single signal period and the moment at which the second layer is completed is after the third moment, it may be considered that the occasion of compositing the third image in response to the vertical synchronization signal 2 at the third moment is missed.

Embodiments of this application are not limited to the foregoing manners, and may further include more manners to determine whether the occasion of compositing the third image in response to the vertical synchronization signal 2 at the third moment is missed. This is not limited.

In some implementations, the electronic device may generate a first message after rendering of the second layer is completed. The first message may indicate Surface Flinger to immediately composite the second image based on the second layer when receiving the second layer, without considering whether there is a vertical synchronization signal 2. The first message may be considered as the vertical synchronization signal 2. That is, a function of the first message is the same as or similar to that of the vertical synchronization signal 2.

In a possible implementation, the electronic device may composite the second image immediately after rendering of the second layer is completed, or may composite the second image after a period of time. This is not limited in embodiments of this application, provided that it is ensured that the electronic device composites the second layer to obtain the second image after rendering of the second layer is completed and before the time at which the 1^{st} vertical synchronization signal is generated after rendering of the second layer is completed.

**S505: The electronic device displays the second image at a fourth moment, where there is an interval of a single signal period between the fourth moment and the third moment.**

Because the electronic device has obtained the second image at the fourth moment through compositing, the electronic device may refresh, in response to a vertical synchronization signal 3 generated at the fourth moment, the image displayed by the electronic device. That is, the electronic device may display the second image.

The first moment may be a moment t1, the second moment may be a moment t2, the third moment may be a moment t3, and the fourth moment may be a moment t4. The first layer may be a layer that the electronic device starts to draw at the moment t1, and the second layer may be a layer that the electronic device starts to draw at the moment t2. The first image may be an image A that the electronic device starts to composite at the moment t2, and the second image may be an image B that the electronic device starts to composite after the moment t3.

In embodiments of this application, application of the method procedure shown in FIG. 5 to the diagram shown in FIG. 4 is merely an example for description, and the method procedure may also be applied to more scenarios. This is not limited.

It may be learned with reference to the related descriptions of FIG. 4 and FIG. 5 that, by implementing the image display method provided in embodiments of this application, it can be ensured that an image can be composited in time and displayed without delay when time for drawing and rendering a single frame of layer by the electronic device is excessively long occasionally (for example, exceeds a single signal period). In addition, the foregoing occasional case does not affect other normal drawing, rendering, compositing, and display processes.

The following describes another example in which the electronic device uses the image display method.

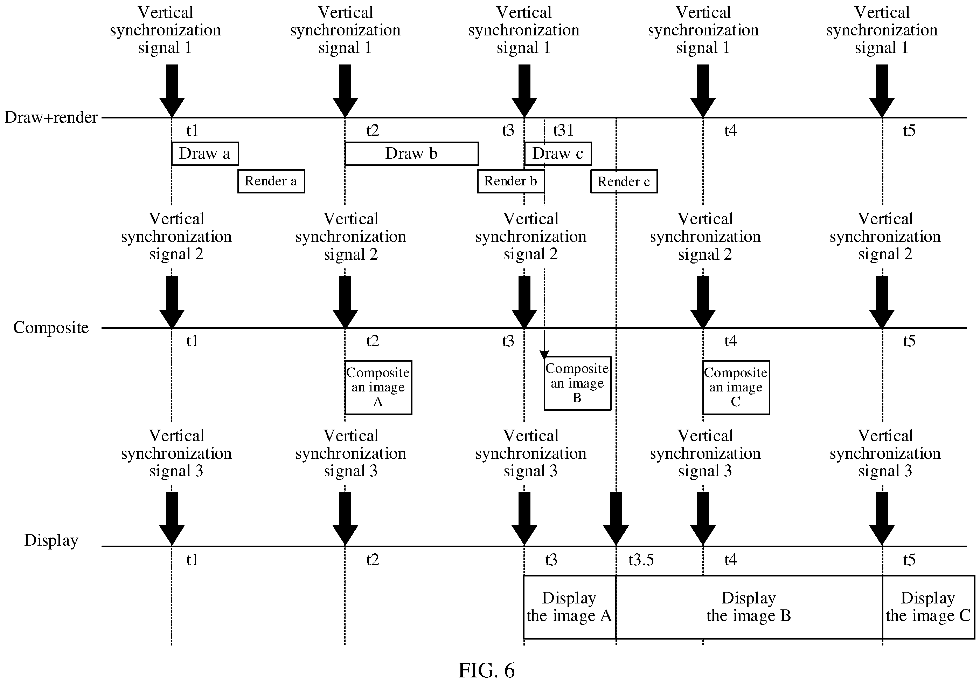

FIG. 6 is a diagram of using an image display method by an electronic device according to an embodiment of this application.

As shown in FIG. 6, the electronic device may draw a in response to a vertical synchronization signal 1 at a moment t1. After the drawing is completed, the electronic device may immediately render a. The electronic device may composite rendered a in response to a vertical synchronization signal 2 at a moment t2, to obtain an image A. The electronic device may display the image A in response to a vertical synchronization signal 3 at a moment t3.

At a moment t2, the electronic device may generate a vertical synchronization signal 1. The electronic device may draw b in response to a vertical synchronization signal 1 at a moment t1. After the drawing is completed, the electronic device may immediately render b. In addition, the electronic device has not completed rendering of b at a moment t3.

In embodiments of this application, in a special case, the electronic device may trigger image compositing by using the first message. Therefore, at the moment t31, that is, when the electronic device completes rendering of b, compositing of rendered b is triggered to obtain an image B.

In embodiments of this application, when the electronic device composites an image in advance, a vertical synchronization signal 3 may be temporarily added at a moment t3.5. Specifically, the electronic device may determine the moment t3.5 based on a moment at which the image B is obtained and a current signal period. The electronic device has obtained the image B at the moment t3.5 through compositing. The electronic device may display the image B in response to the vertical synchronization signal 3 at the moment t3.5. In addition, the electronic device may display the image B between the moment t3.5 and a moment t5.

The electronic device may draw c in response to a vertical synchronization signal 1 at the moment t3. After the drawing is completed, the electronic device may immediately render c. In addition, the electronic device has completed drawing and rendering of c before a moment t4. The electronic device may composite rendered c in response to a vertical synchronization signal 2 at the moment t4, to obtain an image C. The electronic device may display the image C in response to a vertical synchronization signal 3 at the moment t5.

In a possible implementation, for the foregoing procedure of obtaining the image C by the electronic device, refer to the procedure of obtaining the image A or the procedure of obtaining the image B. That is, in embodiments of this application, images continuously composited by the electronic device for a plurality of times may be triggered not by the vertical synchronization signal 2, but by the first message. Images continuously displayed by the electronic device for a plurality of times may alternatively be triggered by the temporarily added vertical synchronization signal 3.

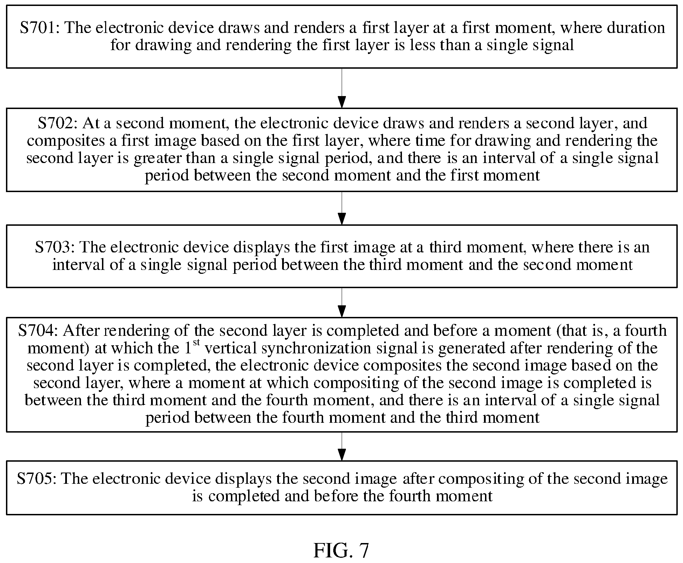

Another image display procedure provided in embodiments of this application is described below with reference to FIG. 7. In the flowchart shown in FIG. 7, delay time for the electronic device to composite a layer can be reduced, so that the electronic device can composite the layer as soon as possible, thereby ensuring display of the image without delay. In addition, the image may be further displayed in advance. The method procedure includes the following steps.

**S701: The electronic device draws and renders a first layer at a first moment, where duration for drawing and rendering the first layer is less than a single signal period.**

**S702: At a second moment, the electronic device draws and renders a second layer, and composites a first image based on the first layer, where duration for drawing and rendering the second layer is greater than a single signal period, and there is an interval of a single signal period between the second moment and the first moment.**

**S703: The electronic device displays the first image at a third moment, where there is an interval of a single signal period between the third moment and the second moment.**

**S704: After rendering of the second layer is completed and before a moment (that is, a fourth moment) at which the 1^{st} vertical synchronization signal is generated after rendering of the second layer is completed, the electronic device composites the second image based on the second layer, where a moment at which compositing of the second image is completed is between the third moment and the fourth moment, and there is an interval of a single signal period between the fourth moment and the third moment.**

For S701 to S704, refer to S501 to S504 in FIG. 5 and related descriptions.

**S705: The electronic device displays the second image after compositing of the second image is completed and before the fourth moment.**

In some implementations, the electronic device may temporarily add a vertical synchronization signal 3 after the electronic device completes compositing of the second image and before the fourth moment, that is, at a sixth moment. The electronic device may display the second image in response to the vertical synchronization signal 3 at the sixth moment. Temporarily adding a vertical synchronization signal 3 indicates that there is still an interval of a single signal period between duration between an added vertical synchronization signal 3 and an original vertical synchronization signal 3 generated by the electronic device. For example, a vertical synchronization signal 3 is added at a moment t3.5, and there is an interval of a single signal period between duration between generating a vertical synchronization signal at a moment t4 and a vertical synchronization signal at a moment t3 by the electronic device.

In a possible implementation, the electronic device may adjust a signal period to implement the foregoing case. Specifically, the electronic device may adjust the signal period for three times to implement the foregoing case: the first adjustment adjusts the single signal period to duration between the sixth moment and the third moment, the second adjustment may adjust the duration to duration between the fourth moment and the sixth moment, and the third adjustment may adjust the duration back to the single signal period.

How to implement the first adjustment is described below:
In some implementations, the electronic device may advance display of the second image by adjusting a period of the vertical synchronization signal 3, that is, advance display of the second image at the fourth moment to display of the second image at the sixth moment. The electronic device may determine a range by which the signal period of the vertical synchronization signal 3 is adjusted based on one or more of the following: a current signal period, a moment at which compositing of the second image is completed, and a moment (that is, the third moment) at which the last vertical synchronization signal 2 is generated before compositing of the second image is completed. Specifically, the electronic device may set the signal period after the first adjustment to duration between the moment at which compositing of the second image is completed and the third moment. In addition, the vertical synchronization signal 3 obtained after the signal period is adjusted for the first time, that is, the added vertical synchronization signal 3, does not affect signal periods of the vertical synchronization signal 2 and the vertical synchronization signal 1.

For example, it is assumed that a current frame rate of a display of the electronic device is 60 Hz, and the electronic device determines, based on the current signal period, the moment at which compositing of the second image is completed, and the third moment, that the electronic device completes compositing of the second image at an intermediate moment between the third moment and the fourth moment. In this case, the electronic device may temporarily adjust the frame rate of the display to a maximum of 120 Hz. That is, the electronic device may temporarily adjust the frame rate of the display to any value from 60 Hz to 120 Hz. For example, after the frame rate of the electronic device is adjusted to 120 Hz, the electronic device may generate an added vertical synchronization signal 3 at the intermediate moment between the third moment and the fourth moment, and display the second image in response to the added vertical synchronization signal 3. In this way, the electronic device may display the second image about 9.8 ms in advance as soon as possible.

For another example, it is assumed that a current frame rate of a display of the electronic device is 60 Hz, and the electronic device determines, based on the current signal period, the moment at which compositing of the second image is completed, and the third moment, that the electronic device completes compositing of the second image at a moment between the third moment and the fourth moment that is two-thirds of the signal period from the third moment. In this case, the electronic device may temporarily adjust the frame rate of the display to a maximum of 90 Hz. That is, the electronic device may temporarily adjust the frame rate of the display to any value from 60 Hz to 90 Hz. For example, after the frame rate of the electronic device is adjusted to 90 Hz, the electronic device may generate an added vertical synchronization signal 3 at the moment after the third moment that is two-thirds of the signal period from the third moment, and display the second image in response to the added vertical synchronization signal 3.

In embodiments of this application, an objective of adjusting the signal period by the electronic device for the first time is to minimize an amount of composited image stored in the electronic device, so that the electronic device can display the composited image as quickly as possible after compositing of the image is completed.

It should be noted that, regardless of how much the electronic device adjusts the signal period for the first time, there is an interval of a single signal period between the third moment and a moment at which the electronic device generates the 2^{nd} vertical synchronization signal 3 after the third moment. In embodiments of this application, the single signal period may be a single signal period that is not adjusted.

The first moment may be a moment t1, the second moment may be a moment t2, the third moment may be a moment t3, and the fourth moment may be a moment t4. The first layer may be a layer that the electronic device starts to draw at the moment t1, and the second layer may be a layer that the electronic device starts to draw at the moment t2. The first image may be an image A that the electronic device starts to composite at the moment t2, and the second image may be an image B that the electronic device starts to composite after the moment t3.

In embodiments of this application, S704 is described by using an example in which duration for drawing and rendering the second layer exceeds a single signal period or does not exceed two signal periods.

In another possible implementation, duration for drawing and rendering the second layer shown in FIG. 7 exceeds a single signal period and exceeds a plurality of signal periods. In this case, after rendering of the second layer is completed and before the moment at which the 1^{st} vertical synchronization signal is generated after rendering of the second layer is completed, the electronic device may composite the second image based on the second layer. A moment at which compositing of the second image is completed is before the moment at which the 1^{st} vertical synchronization signal is generated after rendering of the second layer is completed. Then, the electronic device may display the second image after compositing of the second image is completed and before the moment at which the 1^{st} vertical synchronization signal is generated after rendering of the second layer is completed.

In embodiments of this application, application of the method procedure shown in FIG. 7 to the diagram shown in FIG. 6 is merely an example for description, and the method procedure may also be applied to more scenarios. This is not limited.

It may be learned with reference to the related descriptions of FIG. 6 and FIG. 7 that, by implementing the image display method provided in embodiments of this application, it can be ensured that an image can be composited in time and displayed in advance when time for drawing and rendering a single frame of layer by the electronic device is excessively long occasionally (for example, exceeds a single signal period). This can avoid consuming excessive resources for storing the composite image, allow a user to observe a high-frame-rate image for a better viewing experience.

The following describes another example in which the electronic device uses the image display method.

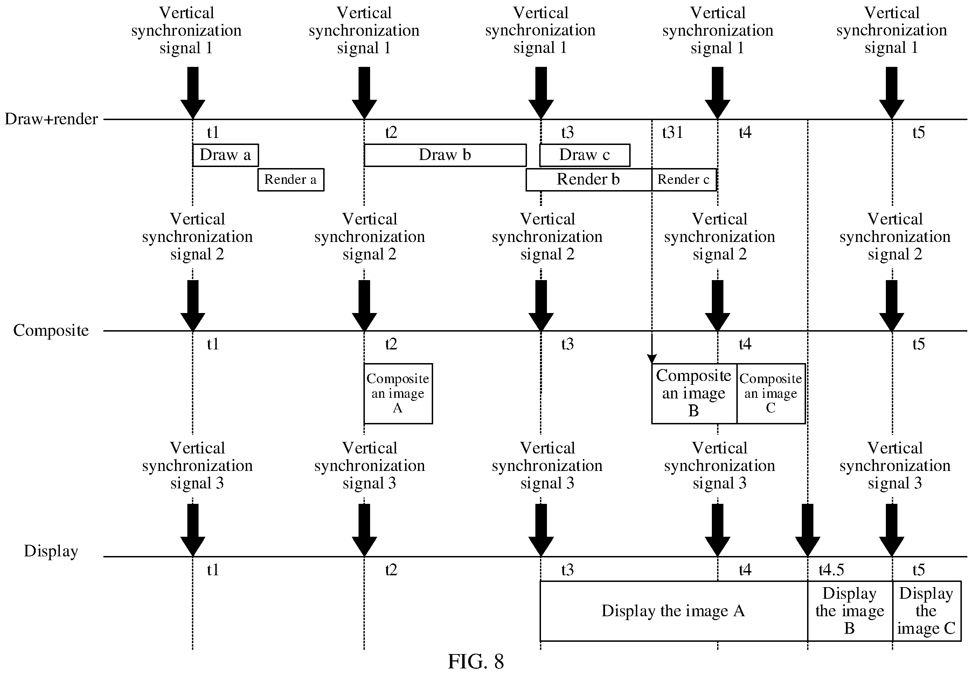

FIG. 8 is a diagram of using an image display method by an electronic device according to an embodiment of this application.

As shown in FIG. 8, the electronic device may draw a in response to a vertical synchronization signal 1 at a moment t1. After the drawing is completed, the electronic device may immediately render a. The electronic device may composite rendered a in response to a vertical synchronization signal 2 at a moment t2, to obtain an image A. The electronic device may display the image A in response to a vertical synchronization signal 3 at a moment t3.

At a moment t2, the electronic device may generate a vertical synchronization signal 1. The electronic device may draw b in response to a vertical synchronization signal 1 at a moment t1. After the drawing is completed, the electronic device may immediately render b. In addition, the electronic device has not completed rendering of b at a moment t3.

In embodiments of this application, in a special case, the electronic device may trigger image compositing by using the first message. Therefore, at the moment t31, that is, when the electronic device completes rendering of b, compositing of rendered b may be triggered to obtain an image B after a moment t4.

In embodiments of this application, when the electronic device triggers compositing of an image by using the first message, a vertical synchronization signal 3 may be temporarily added at a moment t4.5. Specifically, the electronic device may determine the moment t4.5 based on a moment at which the image B is obtained through compositing and a current signal period. The electronic device has obtained the image B at the moment t4.5 through compositing. The electronic device may display the image B in response to the vertical synchronization signal 3 at the moment t4.5. In addition, the electronic device may display the image B between the moment t4.5 and a moment t5.

The electronic device may draw c in response to a vertical synchronization signal 1 at the moment t3. After the drawing is completed, the electronic device may immediately render c. At a moment t4, the electronic device generates a vertical synchronization signal 2. However, at the moment t4, the electronic device has not completed compositing of the image B. Therefore, the electronic device may wait for the image B to be composited completely before compositing rendered c in response to the vertical synchronization signal 2 at the moment t4, to obtain an image C. At a moment t5, the electronic device generates a vertical synchronization signal 3. The electronic device may display the image C in response to a vertical synchronization signal 3 at the moment t5.

In a possible implementation, for the foregoing procedure of obtaining the image C by the electronic device, refer to the procedure of obtaining the image A or the procedure of obtaining the image B. That is, in embodiments of this application, images continuously composited by the electronic device for a plurality of times may be triggered not by the vertical synchronization signal 2, but by the first message. Images continuously displayed by the electronic device for a plurality of times may alternatively be triggered by the temporarily added vertical synchronization signal 3.

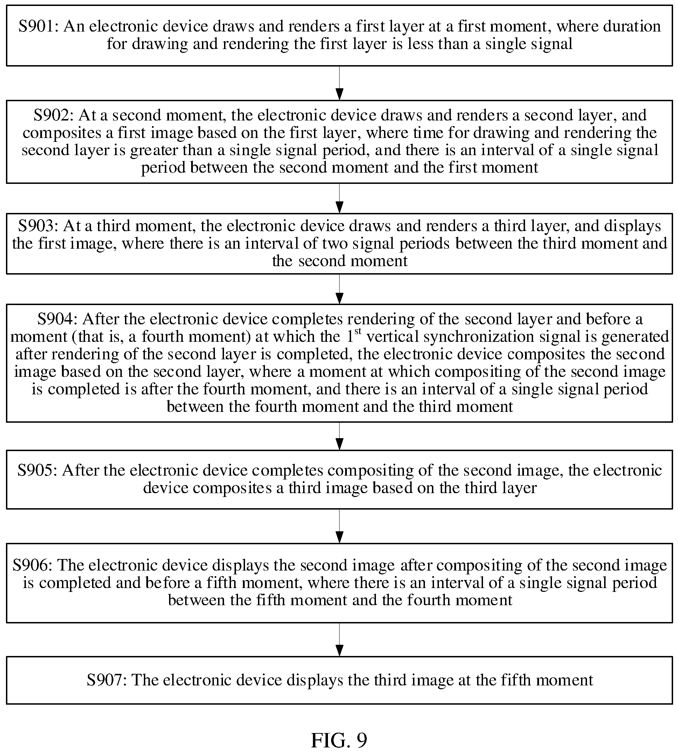

Another image display procedure provided in embodiments of this application is described below with reference to FIG. 9. In the flowchart shown in FIG. 9, delay time for the electronic device to composite a layer can be reduced, so that the electronic device can composite the layer as soon as possible, thereby ensuring display of the image without delay. In addition, the image may be further displayed in advance. Moreover, normal display of a plurality of subsequent frames of images may be not affected. The method procedure includes the following steps.

**S901: The electronic device draws and renders a first layer at a first moment, where duration for drawing and rendering the first layer is less than a single signal period.**

**S902: At a second moment, the electronic device draws and renders a second layer, and composites a first image based on the first layer, where time for drawing and rendering the second layer is greater than a single signal period, and there is an interval of a single signal period between the second moment and the first moment.**

**S903: At a third moment, the electronic device draws and renders a third layer, and displays the first image, where there is an interval of two signal periods between the third moment and the second moment.**

The third moment may be a moment at which the electronic device generates a vertical synchronization signal 1. The vertical synchronization signal 1 may be used to trigger the electronic device to draw the third layer. The third layer may be a layer starting to be drawn in response to the vertical synchronization signal 1 at the third moment.

**S904: After the electronic device completes rendering of the second layer and before a moment (that is, a fourth moment) at which the 1^{st} vertical synchronization signal is generated after rendering of the second layer is completed, the electronic device composites the second image based on the second layer, where a moment at which compositing of the second image is completed is after the fourth moment, and there is an interval of a single signal period between the fourth moment and the third moment.**

For S901 to S904, refer to S501 to S504 in FIG. 5 and related descriptions.

It can be learned from a moment at which compositing of the second image is completed in S904 being after the fourth moment that the electronic device has not completed compositing of the second image between the third moment and the fourth moment. Therefore, in this case, the electronic device cannot perform S705. However, in embodiments of this application, the second image may still be displayed in advance by temporarily adding a new vertical synchronization signal 2. For details, refer to S906.

**S905: After the electronic device completes compositing of the second image, the electronic device composites a third image based on the third layer.**

It can be learned from a moment at which the electronic device composites the second layer being after the fourth moment that, even though the electronic device may complete rendering of the third layer before the fourth moment, the electronic device can obtain the rendered third layer. However, because the electronic device is compositing the second image at the fourth moment, SurfaceFlinger is occupied and cannot composite the third image. Therefore, the electronic device needs to wait for the second image to be composited completely before starting to composite the third image.

**S906: The electronic device displays the second image after compositing of the second image is completed and before a fifth moment, where there is an interval of a single signal period between the fifth moment and the fourth moment.**

In some implementations, the electronic device may temporarily add a vertical synchronization signal 3 after the electronic device completes compositing of the second image and before the fifth moment, that is, at a sixth moment. The electronic device may display the second image in response to the vertical synchronization signal 3 at the sixth moment. Temporarily adding a vertical synchronization signal 3 indicates that there is still an interval of a single signal period between duration between an added vertical synchronization signal 3 and an original vertical synchronization signal 3 generated by the electronic device. For example, a vertical synchronization signal 3 is added at a moment t4.5, and there is an interval of a single signal period between duration between generating a vertical synchronization signal at a moment t5 and a vertical synchronization signal at a moment t4 by the electronic device.

In a possible implementation, the electronic device may adjust a signal period to implement the foregoing case. Specifically, the electronic device may adjust the signal period for three times to implement the foregoing case: the first adjustment adjusts the single signal period to duration between the sixth moment and the fourth moment, the second adjustment may adjust the duration to duration between the fifth moment and the sixth moment, and the third adjustment may adjust the duration back to the single signal period.

How to implement the first adjustment is described below:
In some implementations, the electronic device may advance display of the second image by adjusting a period of the vertical synchronization signal 3, that is, advance display of the second image at the fifth moment to display of the second image at the sixth moment. Specifically, the electronic device may determine a range by which the signal period of the vertical synchronization signal 3 is adjusted based on one or more of the following: a current signal period, a moment at which compositing of the second image is completed, and a moment (that is, the fourth moment) at which the last vertical synchronization signal 2 is generated before compositing of the second image is completed. Specifically, the electronic device may set the signal period after the first adjustment to duration between the moment at which compositing of the second image is completed and the fourth moment. In addition, the vertical synchronization signal 3 obtained after the signal period is adjusted for the first time, that is, the added vertical synchronization signal 3, does not affect signal periods of the vertical synchronization signal 2 and the vertical synchronization signal 1.

For example, it is assumed that a current frame rate of a display of the electronic device is 60 Hz, and the electronic device determines, based on the current signal period, the moment at which compositing of the second image is completed, and the fourth moment, that the electronic device completes compositing of the second image at an intermediate moment between the fourth moment and the fifth moment. In this case, the electronic device may temporarily adjust the frame rate of the display to a maximum of 120 Hz. That is, the electronic device may temporarily adjust the frame rate of the display to any value from 60 Hz to 120 Hz. For example, after the frame rate of the electronic device is adjusted to 120 Hz, the electronic device may generate an added vertical synchronization signal 3 at the intermediate moment between the fourth moment and the fifth moment, and display the second image in response to the added vertical synchronization signal 3. In this way, the electronic device may display the second image about 9.8 ms in advance as soon as possible.

For another example, it is assumed that a current frame rate of a display of the electronic device is 60 Hz, and the electronic device determines, based on the current signal period, the moment at which compositing of the second image is completed, and the fourth moment, that the electronic device completes compositing of the second image at a moment between the fourth moment and the fifth moment that is two-thirds of the signal period from the fourth moment. In this case, the electronic device may temporarily adjust the frame rate of the display to a maximum of 90 Hz. That is, the electronic device may temporarily adjust the frame rate of the display to any value from 60 Hz to 90 Hz. For example, after the frame rate of the electronic device is adjusted to 90 Hz, the electronic device may generate an added vertical synchronization signal 3 at the moment after the fourth moment that is two-thirds of the signal period from the fourth moment, and display the second image in response to the added vertical synchronization signal 3.

In embodiments of this application, an objective of adjusting the signal period by the electronic device for the first time is to minimize an amount of composited image stored in the electronic device, so that the electronic device can display the composited image as quickly as possible after compositing of the image is completed.

It should be noted that, regardless of how much the electronic device adjusts the signal period for the first time, there is an interval of a single signal period between the fourth moment and a moment at which the electronic device generates the 2^{nd} vertical synchronization signal 3 after the fourth moment. In embodiments of this application, the single signal period may be a single signal period that is not adjusted.

**S907: The electronic device displays the third image at the fifth moment.**

The electronic device has displayed the second image before the fifth moment. That is, the second image has been consumed. In addition, the electronic device has obtained the third image before the fifth moment through compositing. Therefore, the electronic device may refresh, in response to a vertical synchronization signal 3 generated at the fifth moment, the image displayed by the electronic device. That is, the electronic device may display the third image.

In this way, after the electronic device displays the image in advance by adjusting the signal period for the first time, although compositing of a next frame of image may be affected, the electronic device displays the next frame of image neither in advance nor with delay, thereby improving stability of the displayed image.

The first moment may be a moment t1, the second moment may be a moment t2, the third moment may be a moment t3, the fourth moment may be a moment t4, and the fifth moment may be a moment t5. The first layer may be a layer that the electronic device starts to draw at the moment t1, and the second layer may be a layer that the electronic device starts to draw at the moment t2. The first image may be an image A that the electronic device starts to composite at the moment t2, the second image may be an image B that the electronic device starts to composite after the moment t3, and the third image may be an image C that the electronic device starts to composite after the moment t4.

In embodiments of this application, S904 is described by using an example in which duration for drawing and rendering the second layer exceeds a single signal period or does not exceed two signal periods.

In another possible implementation, duration for drawing and rendering the second layer shown in FIG. 9 exceeds a single signal period and exceeds a plurality of signal periods. In this case, after rendering of the second layer is completed and before the moment at which the 1^{st} vertical synchronization signal is generated after rendering of the second layer is completed, the electronic device may composite the second image based on the second layer. A moment at which compositing of the second image is completed is after the moment at which the 1^{st} vertical synchronization signal is generated after rendering of the second layer is completed. Then, the electronic device may display the second image after compositing of the second image is completed and before the moment at which the 1^{st} vertical synchronization signal is generated after compositing of the second image is completed.

In embodiments of this application, application of the method procedure shown in FIG. 9 to the diagram shown in FIG. 8 is merely an example for description, and the method procedure may also be applied to more scenarios. This is not limited.

It may be learned with reference to the related descriptions of FIG. 8 and FIG. 9 that, by implementing the image display method provided in embodiments of this application, it can be ensured that an image can be composited in time and quickly and displayed in advance when time for drawing and rendering a single frame of layer by the electronic device is excessively long occasionally (for example, exceeds a single signal period). This can avoid consuming excessive resources for storing the composite image, allow a user to observe a high-frame-rate image for a better viewing experience, and ensure stability of the displayed image.

In a possible implementation, the image display method provided in embodiments of this application may be applied to a game with a high requirement on touch responsiveness, for example, a shooting game, a fighting game, a racing game, a rhythm game, a sports competitive game, or a multiplayer online competitive game.

In a possible implementation, duration for drawing and rendering a layer by the electronic device may further exceed two single signal periods, or even be greater than more signal periods. Duration for compositing a layer by the electronic device may also be excessively long. In this case, the image display method shown in FIG. 5, FIG. 7, and FIG. 9 may still be used. This can also improve problems of image delay synthesis and image delay display.

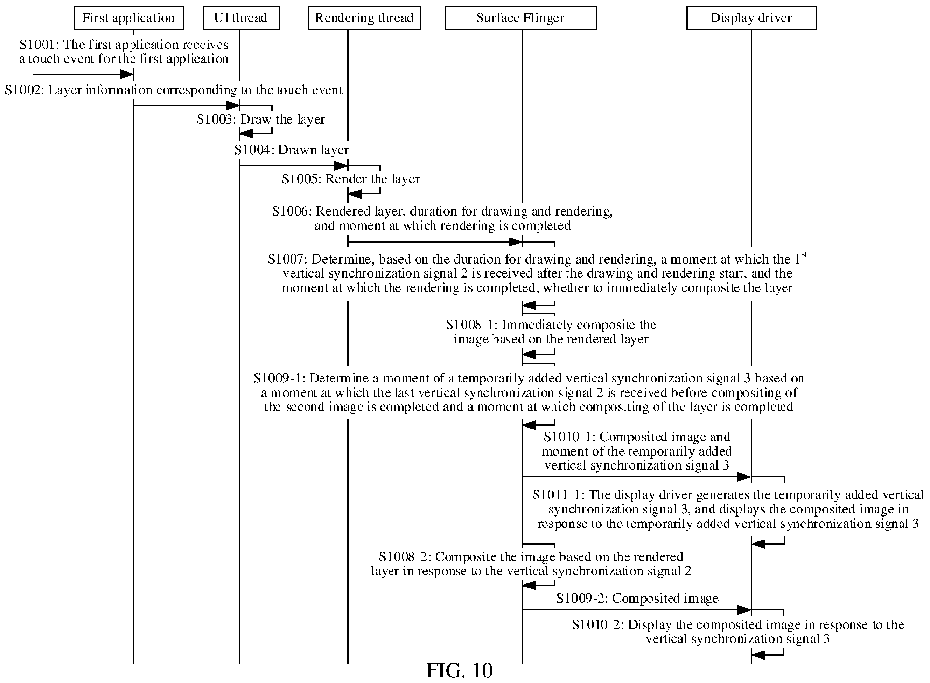

The following describes, with reference to FIG. 10, an interaction diagram of internal modules of an operating system of an electronic device corresponding to a procedure of an image display method according to an embodiment of this application.

A first application, a UI thread, a rendering thread, Surface Flinger, and a display driver data storage module that are shown in FIG. 10 are modules that are included in the electronic device and that are configured to manage receiving of a touch event to display of an image. For definitions of these modules, refer to the foregoing detailed descriptions of the software architecture of the electronic device. Specific functions of these modules are described in detail in the following procedure, and details are not described herein.

S1001: The first application receives a touch event for the first application.

In some implementations, the first application may include a game application. Specifically, the first application may include an application with a high requirement on touch responsiveness. The touch event may be triggered by a user operation. The user operation may include, but is not limited to, a tap operation or a slide operation on various controls and icons in the first application.

Specifically, when a touch sensor receives the user operation, a corresponding hardware interrupt is sent to a kernel layer. A touch driver in the kernel layer processes the touch operation into a touch event, and sends the touch event to the first application.

S1002: The first application sends layer information corresponding to the touch event to the UI thread.

In some implementations, after receiving the touch event, the first application may determine content that the first application needs to display, and the content can be displayed only after drawing, rendering, and compositing. Therefore, the first application may send the layer information corresponding to the touch event to the UI thread.

S1003: The UI thread draws the layer.

Specifically, the UI thread may draw the layer in response to a vertical synchronization signal 1 based on the layer information that is sent by the first application and that corresponds to the touch event.

S1004: The UI thread sends the drawn layer to the rendering thread.

Specifically, after drawing of the layer is completed, the UI thread may send the drawn layer to the rendering thread.

S1005: The rendering thread renders the layer.

Specifically, the rendering thread may render the layer based on the drawn layer sent by the UI thread. In some implementations, a sum of duration for which the UI thread draws the layer and duration for which the rendering thread renders the layer may be less than or equal to a single signal period, or may be greater than a single signal period.

S1006: The rendering thread sends, to Surface Flinger, the rendered layer, duration for drawing and rendering, and a moment at which rendering is completed.

In some implementations, after rendering of the layer is completed, the rendering thread may send, to Surface Flinger, the rendered layer, the duration for drawing and rendering, and timestamp information at which rendering is completed.

S1007: Surface Flinger determines, based on the duration for drawing and rendering, a moment at which the 1^{st} vertical synchronization signal 2 is received after the drawing and rendering start, and the moment at which rendering is completed, whether to immediately composite the layer.

In some implementations, after receiving the rendered layer, Surface Flinger needs to determine whether to immediately composite the layer in response to the first message to obtain the image, or to wait for the 1^{st} vertical synchronization signal 2 after rendering of the layer is completed to arrive and then obtain the image through compositing.

Specifically, Surface Flinger may divide the process into two scenarios based on the duration for drawing and rendering, the moment at which the 1^{st} vertical synchronization signal 2 is received after the drawing and rendering start, and the moment at which rendering is completed:

A first scenario: The duration for drawing and rendering is less than or equal to a single signal period, and a moment of the 1^{st} vertical synchronization signal 2 after a layer starts to be drawn is after the moment at which rendering is completed.

In the first scenario, Surface Flinger may wait for the 1^{st} vertical synchronization signal 2 after rendering of the layer is completed to arrive and then obtain the image through compositing. For example, duration for drawing and rendering a first layer is less than a single signal period, and a moment of the 1^{st} vertical synchronization signal 2 after the first layer starts to be drawn, that is, a second moment, is after a moment at which rendering of the first layer is completed. Surface Flinger may composite the first layer in response to the 1^{st} vertical synchronization signal 2 after rendering of the first layer is completed, that is, the vertical synchronization signal 2 at the second moment, to obtain a first image.

A second scenario: The duration for drawing and rendering is greater than a single signal period, and/or a moment of the 1^{st} vertical synchronization signal 2 after a layer starts to be drawn is before the moment at which rendering is completed.

Assuming that Surface Flinger still waits for the 1^{st} vertical synchronization signal 2 after rendering of the layer is completed and then composites the image in the second scenario, not only storage resources are consumed, but also display of the composited image is delayed, greatly affecting user experience.

Therefore, in embodiments of this application, in the second scenario, Surface Flinger may not wait for the 1^{st} vertical synchronization signal 2 after rendering of the layer is completed, but composite the layer in response to the first message after the rendered layer is received, to obtain the image. For example, duration for drawing and rendering a second layer is greater than a single signal period, and a moment of the 1^{st} vertical synchronization signal 2 after the second layer starts to be drawn, that is, a third moment, is before a moment at which rendering of the second layer is completed. Surface Flinger may composite the second layer in response to the first message immediately or after a period of time after the rendered second layer is received, to obtain a second image.

When Surface Flinger determines that the current scenario is the second scenario, S1008-1 is performed. When Surface Flinger determines that the current scenario is the first scenario, S1008-2 is performed.

S1008-1: Surface Flinger immediately composites the image based on the rendered layer.

Specifically, when determining that the current scenario is the second scenario, Surface Flinger may receive the first message. The first message may indicate Surface Flinger to composite the image based on the rendered layer immediately or after a period of time when receiving the rendered layer, without considering whether there is a vertical synchronization signal 2.

S1009-1: Surface Flinger determines a moment of a temporarily added vertical synchronization signal 3 based on a moment at which the last vertical synchronization signal 2 is received before compositing of the second image is completed and a moment at which compositing of the layer is completed.

In some implementations, to avoid delayed display without affecting user experience, Surface Flinger may determine the moment of the temporarily added vertical synchronization signal 3. Specifically, Surface Flinger may determine a range of a signal period that is adjusted for the first time.

It can be learned from the foregoing second case that the moment of the 1^{st} vertical synchronization signal 2 after the layer starts to be drawn is before the moment at which rendering is completed.

However, in the second case, the range of the signal period that is adjusted for the first time may be further determined in the following manners:

First manner: Determine the range of the signal period that is adjusted for the first time based on the moment at which compositing of the layer is completed, the moment of the 1^{st} vertical synchronization signal 2 after the layer starts to be drawn, and a current signal period.

Specifically, the first manner is implemented when the moment at which compositing is completed is after the moment of the 1^{st} vertical synchronization signal 2 after the layer starts to be drawn and is before a moment of the 1^{st} vertical synchronization signal 2 after the layer starts to be composited. For example, as shown in FIG. 6, a moment at which compositing of the second image is completed is after the third moment and before a fourth moment. Surface Flinger may determine the range of the signal period that is adjusted for the first time based on the current signal period, the moment at which compositing of the second image is completed, and the third moment. For a specific implementation process of the range of the signal period that is adjusted for the first time, refer to the related descriptions in S705. Details are not described herein again.

Second manner: Determine the range of the signal period that is adjusted for the first time based on the moment at which compositing is completed, the moment of the 1^{st} vertical synchronization signal 2 after the layer starts to be composited, and a current signal period.

Specifically, the second manner is implemented when the moment at which compositing is completed is after the moment of the 1^{st} vertical synchronization signal 2 after the layer starts to be composited. For example, as shown in FIG. 8, a moment at which compositing of the second image is completed is after a fourth moment. Surface Flinger may determine the range of the signal period that is adjusted for the first time based on the current signal period, the moment at which compositing of the second image is completed, and the fourth moment. For a specific implementation process of the range of the signal period that is adjusted for the first time, refer to the related descriptions in S906. Details are not described herein again.

S1010-1: Surface Flinger sends the composited image and the moment of the temporarily added vertical synchronization signal 3 to the display driver.

S1011-1: The display driver generates the temporarily added vertical synchronization signal 3, and displays the composited image in response to the temporarily added vertical synchronization signal 3.

In some implementations, regardless of how much the signal period is adjusted, there is an interval of a single signal period between the last vertical synchronization signal 3 received before the adjustment and the 2^{nd} vertical synchronization signal 3 received after the adjustment. That is, after the display driver restores the signal period of the vertical synchronization signal 3, there is a single signal period between every two neighboring vertical synchronization signals 3.

For example, there is a single signal period between the fourth moment and the third moment, and there is a single signal period between a fifth moment and the fourth moment.

S1008-2: Surface Flinger composites the image based on the rendered layer in response to the vertical synchronization signal 2.

S1009-2: Surface Flinger sends the composited image to the display driver.

S1010-2: The display driver displays the composited image in response to the vertical synchronization signal 3.

Specifically, when it is determined that the scenario is the first scenario, S1008-2 to S1010-1 may be performed. For example, Surface Flinger composites the first image based on the rendered first layer in response to the vertical synchronization signal 2 at the second moment. Surface Flinger sends the composited first image to the display driver. The display driver displays the composited first image in response to the vertical synchronization signal 3 at the third moment.

In embodiments of this application, the temporarily added vertical synchronization signal 3 may be referred to as a first vertical synchronization signal.

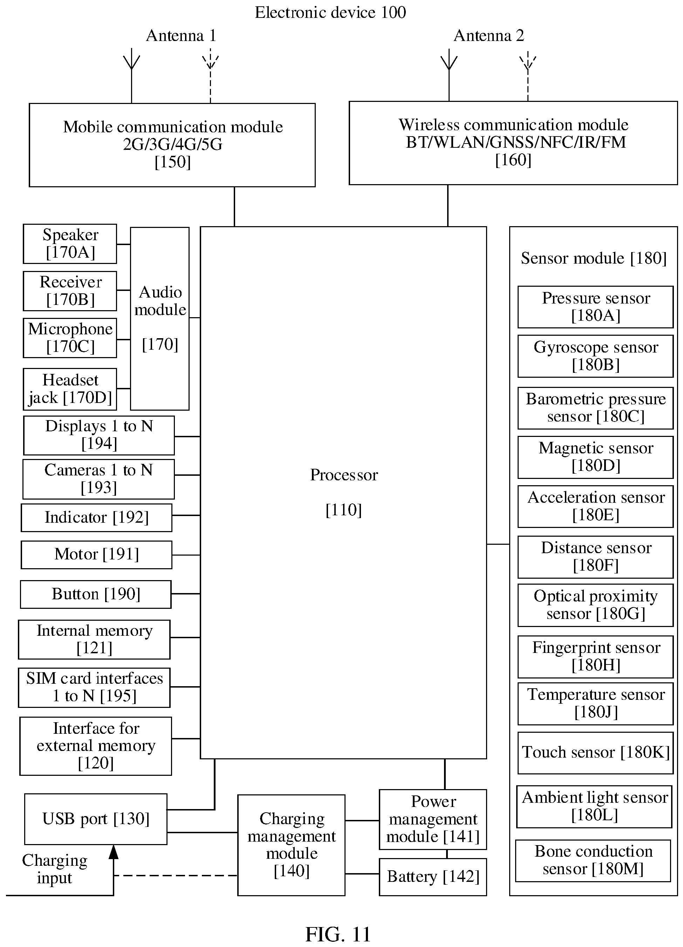

FIG. 11 is a diagram of a structure of an electronic device 100.

The electronic device 100 may be a portable terminal device carrying iOS^{®}, Android^{®}, Microsoft^{®}, Harmony^{®}, or another operating system. The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle, an in-vehicle device, or a smart household device and/or a smart city device. This is not limited thereto. The electronic device 100 may further include a non-portable terminal device such as a laptop computer (laptop) with a touch-sensitive surface or a touch panel or a desktop computer with a touch-sensitive surface or a touch panel. A specific type of the electronic device is not specifically limited in embodiments of this application.

The electronic device 100 may include a processor 110, an interface for external memory 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

In embodiments of this application, the processor 110 may be configured to determine whether time for drawing and rendering a layer includes a moment at which a vertical synchronization signal 2 is generated. The processor 110 may be further configured to indicate Surface Flinger to composite an image immediately. The processor 110 may be further configured to determine, based on a moment at which compositing is completed and a moment at which the last vertical synchronization signal 2 is generated before compositing of a second image is completed, a moment of a temporarily added vertical synchronization signal 3.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access and reduces waiting time of the processor 110, so as to improve system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules that is shown in embodiments of the present invention is merely an example for description, and does not constitute a limitation on a structure of the electronic device 100. In some other embodiments, the electronic device 100 may alternatively use an interface connection manner different from that in the foregoing embodiment, or a combination of a plurality of interface connection manners.

The charging management module 140 is configured to receive a charging input from a charger. The charger may be a wireless charger, or may be a wired charger. In some embodiments of wired charging, the charging management module 140 may receive a charging input of the wired charger through USB interface 130. In some embodiments of wireless charging, the charging management module 140 may receive a wireless charging input by using a wireless charging coil of the electronic device 100. The charging management module 140 may further supply power to the electronic device through the power management module 141 while charging the battery 142.

The power management module 141 is configured to connect the battery 142, the charging management module 140, and the processor 110.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communications frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same component as at least some modules in the processor 110.

The modem processor may include a modulator and a demodulator.

The wireless communications module 160 may provide a solution, applied to the electronic device 100, to wireless communication including a wireless local area network (wireless local area networks, WLAN) (such as a wireless fidelity (wireless fidelity, Wi-Fi) network), Bluetooth (Bluetooth, BT), global navigation satellite system (global navigation satellite system, GNSS), frequency modulation (frequency modulation, FM), near field communication (near field communication, NFC), an infrared (infrared, IR) technology, and the like. The wireless communication module 160 may be one or more components integrating at least one communication processing module. The wireless communication module 160 receives an electromagnetic wave through the antenna 2, performs demodulation and filtering on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a Beidou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to perform mathematical and geometric calculation for graphic rendering. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a Miniled, a MicroLed, a Micro-oLed, a quantum dot light emitting diode (quantum dot light emitting diodes, QLED), or the like. In some embodiments, the electronic device 100 may include one or N displays 194, where N is a positive integer greater than 1.

In embodiments of this application, the display 194 may be configured to display a composited image when a vertical synchronization signal 3 is detected.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, light is transmitted to a photosensitive element of the camera through a lens, and an optical signal is converted into an electrical signal. The photosensitive element of the camera transmits the electrical signal to the ISP for processing, to convert the electrical signal into a visible image. The ISP may further perform algorithm optimization on noise, brightness, and a color of the image. The ISP may further optimize parameters such as exposure and a color temperature of a photographing scenario. In some embodiments, the ISP may be disposed in the camera 193.

The camera 193 is configured to capture a static image or a video. An object generates an optical image through the lens and projects the optical image to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP, so that the ISP converts the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG)1, MPEG2, MPEG3, and MPEG4.

The NPU is a neural-network (neural-network, NN) computing processor, and quickly processes input information with reference to a structure of a biological neural network, for example, a transfer mode between human brain neurons, and may further continuously perform self-learning. Applications such as intelligent cognition of the electronic device 100, for example, image recognition, facial recognition, speech recognition, and text understanding, may be implemented through the NPU.

The internal memory 121 may include one or more random access memories (random access memory, RAM), and one or more non-volatile memories (non-volatile memory, NVM).

In embodiments of this application, the internal memory 121 may store an image composited by Sureface Flinger.

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a 5th generation DDR SDRAM generally referred to as a DDR5 SDRAM), or the like. The non-volatile memory may include a magnetic disk storage device and a flash memory (flash memory).

According to division of an operating principle, the flash memory may include NOR FLASH, NAND FLASH, 3D NAND FLASH, and the like. According to division of potential levels of storage cells, the flash memory may include a single-level cell (single-level cell, SLC), a multi-level cell (multi-level cell, MLC), a triple-level cell (triple-level cell, TLC), a quad-level cell (quad-level cell, QLC), and the like. According to division of a storage specification, the flash memory may include universal flash storage (universal flash storage, UFS), an embedded multi media card (embedded multi media Card, eMMC), and the like.

The random access memory may be directly read and written by the processor 110, may be configured to store an executable program (such as machine instructions) of an operating system or another running program, and may be further configured to store data of a user and data of an application.

The non-volatile memory may also store an executable program, data of a user, data of an application, and the like, which may be loaded into the random access memory in advance for the processor 110 to directly read and write.

In embodiments of this application, code for implementing the image display according to embodiments of this application may be stored in the non-volatile memory. When running a first application, the electronic device 100 may load the executable code stored in the non-volatile memory to the random access memory.

The external memory interface 120 may be configured to be connected to an external non-volatile memory, to expand a storage capability of the electronic device 100. The external non-volatile memory communicates with the processor 110 through the external memory interface 120, to implement a data storage function. For example, a file such as music or video is stored in the external non-volatile memory.

The electronic device 100 may implement an audio function such as music play or recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some function modules in the audio module 170 may be disposed in the processor 110.

The speaker 170A, also referred to as a "loudspeaker", is configured to convert an audio electrical signal into a sound signal. The electronic device 100 may be used to listen to music or answer a call in a hands free mode through the speaker 170A.

The receiver 170B, also referred to as an "earpiece", is configured to convert an electrical audio signal into a sound signal. When the electronic device 100 answers a call or receives voice information, the receiver 170B may be put close to a human ear to receive a voice.

The microphone 170C, also referred to as a "mike" or a "mic", is configured to convert a sound signal into an electrical signal. When making a call or sending voice information, a user may make a sound approaching the microphone 170C through a mouth of the user, to input a sound signal into the microphone 170C. The electronic device 100 may be provided with at least one microphone 170C. In some other embodiments, the electronic device 100 may be provided with two microphones 170C, to implement a noise reduction function in addition to collecting a sound signal. In some other embodiments, three, four, or more microphones 170C may be disposed in the electronic device 100, to collect a sound signal, reduce noise, and identify a sound source, so as to implement a directional recording function and the like.

The earphone jack 170D is configured to be connected to a wired earphone. The headset jack 170D may be a USB interface 130, or may be a 3.5 mm open mobile electronic device platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal to an electrical signal. In some embodiments, the pressure sensor 180A may be disposed on the display screen 194.

The gyroscope sensor 180B may be configured to determine a movement posture of the electronic device 100. In some embodiments, angular velocities of the electronic device 100 around three axes (namely, an x axis, a y axis, and a z axis) may be determined through the gyroscope sensor 180B.

The barometric pressure sensor 180C is configured to measure barometric pressure. In some embodiments, the electronic device 100 calculates an altitude by using a barometric pressure value measured by the barometric pressure sensor 180C, to assist in positioning and navigation.

The magnetic sensor 180D includes a Hall sensor. The electronic device 100 may detect opening and closing of a flip leather cover by using the magnetic sensor 180D. In some embodiments, when the electronic device 100 is a clamshell phone, the electronic device 100 may detect opening and closing of a flip through the magnetic sensor 180D. Further, characteristics such as automatic unlocking of the flip are set based on the detected opening and closing state of the leather cover or the opening and closing state of the flip.

The acceleration sensor 180E may detect sizes of acceleration of the electronic device 100 in various directions (usually in three axial directions). When the electronic device 100 is stationary, a magnitude and a direction of a gravity may be detected. The acceleration sensor may further be configured to recognize a posture of the electronic device, and is applied to applications such as switching between a landscape mode and a portrait mode and a pedometer.

The distance sensor 180F is configured to measure a distance.

The optical proximity sensor 180G may include, for example, a light-emitting diode (LED) and a light detector, for example, a photodiode.

The ambient light sensor 180L is configured to sense ambient light brightness.

The fingerprint sensor 180H is configured to collect a fingerprint. The electronic device 100 may implement fingerprint unlocking, application lock accessing, fingerprint-based photographing, fingerprint-based incoming call answering, and the like by using a feature of the collected fingerprint.

The temperature sensor 180J is configured to detect a temperature.

The touch sensor 180K is also referred to as a "touch device".

The bone conduction sensor 180M may obtain a vibration signal.

The button 190 includes a power-on key, a volume key, and the like.

The motor 191 may generate a vibration prompt.

The indicator 192 may be an indicator light, may be configured to indicate a charging status or a power change, and may be further configured to indicate a message, a missed incoming call, a notification, and the like.

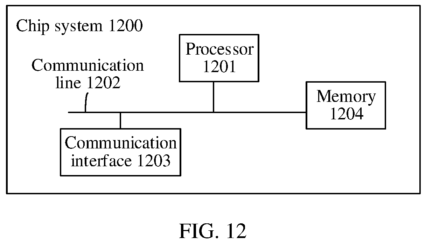

FIG. 12 is a diagram of a structure of a chip according to an embodiment of this application.

As shown in FIG. 12, the chip 1200 includes one or at least two (including two) processors 1201, a communication line 1202, and a communication interface 1203. Optionally, the chip 1200 further includes a memory 1204.

In some implementations, the memory 1204 stores the following elements: an executable module or a data structure, or a subset thereof, or an extension set thereof.

The method described in the foregoing embodiments of this application is applicable to the processor 1201 or implemented by the processor 1201. The processor 1201 may be an integrated circuit chip and has a signal processing capability. In an implementation process, steps in the foregoing methods can be implemented by using a hardware integrated logical circuit in the processor 1201, or by using instructions in a form of software. The processor 1201 may be a general-purpose processor (for example, a microprocessor or a conventional processor), a digital signal processor, an application-specific integrated circuit (application specific integrated circuit, ASIC), a field-programmable gate array (field-programmable gate array, FPGA) or another programmable logic device, a discrete gate, a transistor logic device, or a discrete hardware component. The processor 1201 may implement or perform various processing-related methods, steps, and logical block diagrams disclosed in embodiments of this application.

The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a read-only memory, a programmable read-only memory, or an electrically erasable programmable read-only memory (electrically erasable programmable read only memory, EEPROM). The storage medium is located in the memory 1204, and the processor 1201 reads information in the memory 1204 and completes the steps of the foregoing method in combination with hardware thereof.

The processor 1201, the memory 1204, and the communication interface 1203 may communicate with each other through the communication line 1202.

In the foregoing embodiments, the instructions stored in the memory for execution by the processor may be implemented in a form of a computer program product. The computer program product may be pre-written into the memory or may be downloaded and installed in the memory in a form of software.

An embodiment of this application further provides a computer program product including one or more computer instructions. When the computer program instructions are loaded and executed on the computer, the processes or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any available medium accessible to a computer or a data storage device, such as a server or a data center, including one or more available media. For example, the available medium may include a magnetic medium (for example, a floppy disk, a hard disk, or a magnetic tape), an optical medium (for example, a digital versatile disc (digital versatile disc, DVD)), a semiconductor medium (for example, a solid-state drive (solid-state drive, SSD)), or the like.

An embodiment of this application provides an electronic device. The electronic device includes a processor and a memory, the memory is configured to store a computer program, and the processor is configured to execute the computer program, to perform the foregoing image processing method.

An embodiment of this application provides a chip. The chip includes a processor, and the processor is configured to invoke a computer program in a memory to execute the technical solutions in the foregoing embodiments. Implementation principles and technical effects thereof are similar to those in the related embodiments, and details are not described herein again.

An embodiment of the disclosure further provides a computer-readable storage medium. The computer-readable storage medium stores a computer program or instructions. The computer program or instructions are executed by a processor to implement the foregoing methods. All or some of the methods described in the foregoing embodiments may be implemented through software, hardware, firmware, or any combination thereof. If the methods are implemented through the software, a function may be stored on the computer-readable medium as one or more instructions or code or transmitted on the computer-readable medium. The computer-readable medium may include a computer storage medium and communication medium, and may also include any medium that can transfer a computer program from one place to another. The storage medium may be any target medium that can be accessed by a computer.

In a possible design, the computer-readable storage medium may include a compact disc read-only memory (compact disc read-only memory, CD-ROM), a RAM, a ROM, an EEPROM, or another optical disc memory. The computer-readable medium may include a disk memory or other disk storage devices. In addition, any connection line may also be appropriately referred to as a computer-readable medium. For example, if software is transmitted from a website, a server, or another remote source by using a coaxial cable, an optical fiber cable, a twisted pair, a DSL or wireless technologies (such as infrared ray, radio, and microwave), the coaxial cable, the optical fiber cable, the twisted pair, the DSL or the wireless technologies such as infrared ray, radio, and microwave are included in the definition of the medium. A magnetic disk and an optical disc used in this specification include an optical disc (CD), a laser disc, an optical disc, a DVD, a floppy disk, and a blue ray disc. The magnetic disk generally reproduces data in a magnetic manner, while the optical disc reproduces data optically by using laser. The foregoing combination should also be included in the scope of the computer-readable medium.

All or some of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer instructions. When the computer program instructions are loaded and executed on the computer, the processes or functions according to this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any available medium accessible to a computer or a data storage device, such as a server or a data center, including one or more available media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

A person of ordinary skill in the art may understand that all or some of the flow processes of the methods in the embodiments may be implemented by a computer program instructing relevant hardware. The program may be stored in a computer-readable storage medium. When the program is executed, the procedures of the foregoing method embodiments are performed. The foregoing storage medium includes: any medium that can store program code, such as a ROM, a random access memory RAM, a magnetic disk, or an optical disc.

In conclusion, what are described above are merely embodiments of the technical solutions of the present invention, and are not intended to limit the scope of protection of the present invention. Any modifications, equivalent replacements, improvements, and the like made based on the disclosure of the present invention shall fall within the protection scope of the present invention.

## Claims

1. An image display method, wherein the method is applied to an electronic device, and the method comprises:
drawing, by the electronic device, a first layer and then rendering the first layer at a first moment, wherein duration for drawing and rendering the first layer does not exceed a single signal period, and the signal period is a period in which the electronic device generates two neighboring vertical synchronization signals;
at a second moment, compositing, by the electronic device, the first layer to obtain a first image, and drawing a second layer and then rendering the second layer, wherein duration for drawing and rendering the second layer exceeds a single signal period, the second moment is after the first moment, and there is an interval of a single signal period between the second moment and the first moment;
displaying, by the electronic device, the first image at a third moment, wherein the third moment is after the second moment, and there is an interval of a single signal period between the third moment and the second moment;
after rendering of the second layer is completed and before a moment at which the 1^{st} vertical synchronization signal is generated after rendering of the second layer is completed, compositing, by the electronic device, the second layer to obtain a second image; and
displaying, by the electronic device, the second image.

2. The method according to claim 1, wherein displaying, by the electronic device, the second image specifically comprises:
displaying, by the electronic device, the second image at a fourth moment, wherein the fourth moment is after the third moment, and there is an interval of a single signal period between the fourth moment and the third moment.

3. The method according to claim 1, wherein displaying, by the electronic device, the second image specifically comprises:
displaying, by the electronic device, the second image at a sixth moment, wherein the sixth moment is after a moment at which the second image is obtained.

4. The method according to claim 3, wherein before displaying, by the electronic device, the second image at the sixth moment, the method further comprises:
generating, by the electronic device, a first vertical synchronization signal at the sixth moment, wherein the first vertical synchronization signal is used to trigger the electronic device to display the second image at the sixth moment.

5. The method according to claim 3, wherein the moment at which the electronic device obtains the second image is after the third moment and before a fourth moment, the fourth moment is after the third moment, there is an interval of a single signal period between the fourth moment and the third moment, and the sixth moment is before the fourth moment.

6. The method according to claim 5, wherein the method further comprises:
drawing, by the electronic device, a third layer and then rendering the third layer at the third moment, wherein duration for drawing and rendering the third layer does not exceed a single signal period;
compositing, by the electronic device, the third layer at the fourth moment to obtain a third image; and
displaying, by the electronic device, the third image at a fifth moment, wherein the fifth moment is after the fourth moment, and there is an interval of a single signal period between the fifth moment and the fourth moment.

7. The method according to claim 3, wherein the moment at which the electronic device obtains the second image is after a fourth moment, the fourth moment is after the third moment, there is an interval of a single signal period between the fourth moment and the third moment, and the sixth moment is after the fourth moment.

8. The method according to claim 7, wherein the method further comprises:
drawing, by the electronic device, a third layer and then rendering the third layer at the third moment, wherein duration for drawing and rendering the third layer does not exceed a single signal period;
after the electronic device obtains the second image, compositing, by the electronic device, the third layer to obtain a third image; and
displaying, by the electronic device, the third image at a fifth moment, wherein the fifth moment is after the fourth moment, and the fifth moment is a moment at which the electronic device generates the 1^{st} vertical synchronization signal after obtaining the third image.

9. The method according to any one of claims 1 to 8, wherein before drawing, by the electronic device, the first layer and then rendering the first layer at the first moment, the method further comprises:
starting, by the electronic device, a first application, wherein the first application comprises one or more of the following: a shooting game, a fighting game, a racing game, a rhythm game, a sports competitive game, or a multiplayer online competitive game.

10. The method according to any one of claims 1 to 8, wherein the electronic device further comprises a drawing thread, a rendering thread, a graphics compositor, and a display, wherein
at the first moment, the electronic device draws the first layer by using the drawing thread, and then renders the first layer by using the rendering thread;
at the second moment, the electronic device composites the first layer by using the graphics compositor to obtain the first image, and draws the second layer by using the drawing thread, and then renders the second layer by using the rendering thread;
the electronic device displays the first image by using the display at the third moment;
after rendering of the second layer is completed and before a time at which the 1^{st} vertical synchronization signal is generated after rendering of the second layer is completed, the electronic device composites the second layer by using the graphics compositor to obtain the second image; and
the electronic device displays the second image by using the display.

11. An electronic device, comprising one or more processors and one or more memories, wherein the one or more memories are coupled to the one or more processors, the one or more memories are configured to store computer program code, the computer program code comprises computer instructions, and when the one or more processors execute the computer instructions, the electronic device is enabled to perform the method according to any one of claims 1 to 10.

12. A computer-readable storage medium, wherein the computer-readable storage medium stores a computer program, the computer program comprises program instructions, and when the program instructions are run on an electronic device, the electronic device is enabled to perform the method according to any one of claims 1 to 10.
